# EUROPEAN PATENT SPECIFICATION

(11) **EP 4 429 212 B1**
(45) Date of publication and mention of the grant of the patent: **25.03.2026**
(21) Application number: 22906420.9
(22) Date of filing: 09.12.2022
(51) Int. Cl.: H04L 69/22

(54) **SERVICE PROCESSING METHOD, APPARATUS, AND SYSTEM**
DIENSTVERARBEITUNGSVERFAHREN, -VORRICHTUNG UND -SYSTEM
PROCÉDÉ, APPAREIL ET SYSTÈME DE TRAITEMENT DE SERVICE

(30) Priority: 14.12.2021 CN 202111527212; 26.01.2022 CN 202210096188
(43) Date of publication of application: 11.09.2024
(73) Proprietor: Huawei Technologies Co., Ltd., Shenzhen, Guangdong 518129 (CN)
(72) Inventor: LI, Cheng, Shenzhen, Guangdong 518129 (CN); XIA, Yang, Shenzhen, Guangdong 518129 (CN)
(74) Representative: MERH-IP Matias Erny Reichl Hoffmann Patentanwälte PartG mbB
(86) International application number: PCT/CN2022/137895
(87) International publication number: WO 2023/109672

(56) References cited:
- CN-A- 112 511 988
- CN-A- 112 787 922
- CN-A- 113 497 758
- US-A1- 2004 127 233
- US-A1- 2021 377 778
- US-B2- 7 130 285
- US-B2- 9 088 611

## Description

This application claims priority to Chinese Patent Application No. 202111527212.1, filed on December 14, 2021 and entitled "IPV6 OPTION OF AGGREGATION SERVICE INFORMATION", and to Chinese Patent Application No. 202210096188.9, filed on January 26, 2022 and entitled "SERVICE PROCESSING METHOD, APPARATUS, AND SYSTEM".

### TECHNICAL FIELD

This application relates to the field of network technologies, and in particular, to a service processing method, apparatus, and system.

### BACKGROUND

In development of current network technologies, a plurality of services can be carried out for an internet protocol version 6 (internet protocol version 6, IPv6) packet. For example, these services may include a slice (slice) service, an in-band flow measurement service, an application-aware networking (application-aware networking, APN) service, a deterministic networking (deterministic networking, DetNet) service, and the like. The in-band flow measurement service may include an in-situ flow information telemetry (in-situ flow information telemetry, IFIT) service or an in-situ operations, administration, and maintenance (in-situ operations, administration, and maintenance, IOAM) service.

Currently, different option (option) fields are usually extended in an IPv6 extension header of an IPv6 packet for the services to carry service information of the corresponding services. For example, when an IPv6 packet needs to support both a slice service and an IFIT service, two option fields need to be extended in an IPv6 extension header of the IPv6 packet for the slice service and the IFIT service, and service information of a corresponding service is carried in an option field corresponding to each of the slice service and the IFIT service.

However, according to a protocol, an option field needs to include a type (type) subfield, a length (length) subfield, and other fixed content for describing the option field. Therefore, when an option field is extended for each service, each extended option field includes the fixed content. As a result, a length of an IPv6 extension header is large, overheads of the IPv6 extension header are high, and packet overheads are high.
Document US 7130285 B2 relates to a method for performing a handoff of a mobile station (MS) from a first base station (BS) to a second BS in a mobile communication system. The first BS sends a handoff required message, which includes a service type identifier of a concurrent service of the voice and packet data and a service configuration record, to the MSC. The MSC sends the received handoff required message to the second BS. The second BS determines whether it can communicate with the MS using a radio resource specified in the service type identifier and the service configuration record, and when it cannot, sends to the MSC a new service type identifier and a new service configuration record for communicating either the voice or packet data with the MS. The MS then communicates with the second BS using the new service type identifier and the new service configuration record.

### SUMMARY

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. This application provides a service processing method, apparatus, and system. The technical solutions of this application are as follows:

According to a first aspect, a service processing method is provided. The method includes: A network device receives a packet including an option field, where the option field carries first service information and second service information, the first service information corresponds to a first service, the second service information corresponds to a second service, and the first service is different from the second service; and the network device processes the packet based on the first service information. For example, the network device processes the packet based on the option field.

In the technical solution provided in this application, the same option field in the packet carries the first service information and the second service information, the first service information corresponds to the first service, the second service information corresponds to the second service, and the first service is different from the second service. That is, a same option field in a same packet carries service information of at least two different services. In other words, a same option field in a same packet can carry service information of at least two different services. Therefore, the option field does not need to be extended for each service. Compared with a current solution in which an option field is extended for each service, overheads caused by some fixed content in the option field can be reduced, to help reduce packet overheads.

In addition, in the current solution in which the option field is extended for each service, each option field usually further includes some optional subfields for alignment or future extension, and these optional subfields easily cause high packet overheads. In the technical solution provided in this application, a same option field in a same packet can carry service information of at least two different services. Compared with the current solution in which the option field is extended for each service, this application can reduce overheads caused by some optional subfields, and reduce packet overheads.

In addition, after obtaining (for example, receiving or generating) the packet, the network device usually needs to process the packet, for example, forward the packet or perform some service processing for the packet. In the current solution in which the option field is extended for each service, a packet length is large. As a result, packet processing complexity of a network device is high, and forwarding performance of the network device is low. In the technical solution provided in this application, a same option field in a same packet can carry service information of at least two different services. Therefore, a packet length can be reduced, thereby simplifying packet processing complexity of the network device, and improving forwarding performance of the network device.

Optionally, the option field includes a first subfield and a second subfield, the first subfield carries the first service information, and the second subfield carries the second service information. Both the first subfield and the second subfield may be referred to as a service subfield. The first subfield may correspond to the first service, and the second subfield may correspond to the second service. In this way, the first subfield may carry the first service information, and the second subfield may carry the second service information.

In the technical solution provided in this application, the first subfield corresponding to the first service and the second subfield corresponding to the second service are set in the same option field, the first subfield carries the first service information, and the second subfield carries the second service information, so that the option field can carry service information of at least two different services.

Optionally, a length of the first subfield is the same as a length of the second subfield.

In the technical solution provided in this application, in the same option field, the length of the first subfield corresponding to the first service is the same as the length of the second subfield corresponding to the second service. Therefore, in a process in which the network device processes the packet based on the option field included in the packet, if the network device does not support the first service and/or the second service, the network device may directly skip the first subfield and/or the second subfield, to help simplify processing logic of the network device. In addition, the length of the first subfield is the same as the length of the second subfield, so that the first subfield and the second subfield can be aligned.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield. The third subfield may be referred to as a service subfield, and the third subfield corresponds to the third service. In this way, the third subfield may carry the third service information.

In the technical solution provided in this application, the same option field may include a plurality of service subfields, service subfields other than the last service subfield in the plurality of service subfields have a same length, and a length of the last service subfield is different from the length of the other service subfields. For example, the first subfield, the second subfield, and the third subfield are all service subfields. In the same option field, the length of the first subfield is the same as the length of the second subfield. Therefore, in the process in which the network device processes the packet based on the option field included in the packet, if the network device does not support the first service and/or the second service, the network device may skip the first subfield and/or the second subfield, and directly process the packet based on the service information carried in a next subfield (for example, the third subfield). This helps simplify processing logic of the network device. The third subfield is arranged after the second subfield, and the third subfield may be the last service subfield in the option field. Therefore, in the process in which the network device processes the packet based on the option field included in the packet, if the network device does not support the third service, the network device may directly skip the option field. In this way, in this application, the length of the third subfield may be set to be different from the length of the first subfield, in other words, the length of the third subfield does not need to be limited, so that the option field can flexibly support various services.

Optionally, the length of the third subfield is greater than the length of the first subfield. For example, the third subfield is the last service subfield in the option field. That is, the length of the last service subfield is greater than a length of remaining service subfields.

In the technical solution provided in this application, because the length of the third subfield is greater than the length of the first subfield, a service with longer service information may be used as the third service, and the third subfield carries service information of the third service. For example, service information of an IFIT service is usually long, and the third service may be the IFIT service.

Optionally, the length of the third subfield is less than the length of the first subfield. For example, the third subfield is the last service subfield in the option field. That is, the length of the last service subfield is less than a length of remaining service subfields.

In the technical solution provided in this application, because the length of the third subfield is less than the length of the first subfield, a service with shorter service information may be used as the third service, and the third subfield carries service information of the third service.

Optionally, the length of the third subfield is equal to the length of the first subfield.

Optionally, both the length of the first subfield and the length of the second subfield are 2n bits, where n is an integer greater than or equal to 3.

In the technical solution provided in this application, because both the length of the first subfield and the length of the second subfield are 2n bits, the first subfield can be aligned with the second subfield, and the first subfield and the second subfield can be aligned with another subfield in the option field.

Optionally, both the length of the first subfield and the length of the second subfield are 8 bits, 16 bits, 32 bits, or 64 bits. For example, both the length of the first subfield and the length of the second subfield are 32 bits.

In the technical solution provided in this application, because both the length of the first subfield and the length of the second subfield are 8 bits, 16 bits, 32 bits, or 64 bits, the first subfield can be aligned with the second subfield, and the first subfield and the second subfield can be aligned with another subfield in the option field.

Optionally, the option field further includes a fourth subfield, and the fourth subfield indicates the length of the first subfield and the length of the second subfield. For example, the fourth subfield indicates that both the length of the first subfield and the length of the second subfield are 32 bits. The fourth subfield may also be referred to as a length flag subfield or a length indication subfield.

In the technical solution provided in this application, the fourth subfield is set in the option field, and the fourth subfield indicates the length of the first subfield and the length of the second subfield in the option field, so that the network device learns of the length of the first subfield and the length of the second subfield. In this way, when the network device supports the first service and/or the second service, the network device obtains the first service information from the first subfield based on the length of the first subfield, and/or obtains the second service information from the second subfield based on the length of the second subfield. When the network device does not support the first service and/or the second service, the network device skips the first subfield and/or the second subfield based on the length of the first subfield and/or the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2. For example, the service flag subfield indicates that the option field carries service information of k services in the m services, the k services include the first service and the second service, k is less than or equal to m, and k is a positive integer. The service flag subfield may also be referred to as a service indication subfield.

In the technical solution provided in this application, the service flag subfield is set in the option field, and the service flag subfield is set to correspond to the m services, so that the network device can learn, based on the service flag subfield, service information of which services in the m services are carried in the option field. For example, the network device learns of, based on the service flag subfield, that the option field carries the first service information corresponding to the first service and the second service information corresponding to the second service.

Optionally, the service flag subfield corresponds to the m services in a bit mapping manner. Specifically, the service flag subfield includes m flag bits, and the m flag bits are in a one-to-one correspondence with the m services. For example, each flag bit in the m flag bits indicates whether the option field carries service information of a service corresponding to the flag bit. A value of each flag bit may be 0 or 1, where "1" indicates that the option field carries the service information of the service corresponding to the flag bit, and "0" indicates that the option field does not carry the service information of the service corresponding to the flag bit. In this application, a first flag bit in the m flag bits corresponds to the first service, a second flag bit in the m flag bits corresponds to the second service, the first flag bit indicates that the option field carries the first service information, and the second flag bit indicates that the option field carries the second service information. Both a value of the first flag bit and a value of the second flag bit may be 1.

In the technical solution provided in this application, the service flag subfield is set to include the m flag bits that are in the one-to-one correspondence with the m services, so that the network device can learn, based on each flag bit, whether the option field carries service information of a service corresponding to the flag bit, to process the packet based on the service information carried in the option field included in the packet.

Optionally, the first flag bit and the second flag bit are arranged in order, the first service information and the second service information are arranged in order, and an arrangement order of the first service information and the second service information corresponds to an arrangement order of the first flag bit and the second flag bit. For example, the first service information is carried in the first subfield, and the second service information is carried in the second subfield. An arrangement order of the first subfield and the second subfield corresponds to the arrangement order of the first flag bit and the second flag bit, so that the arrangement order of the first service information and the second service information corresponds to the arrangement order of the first flag bit and the second flag bit. Specifically, both the first subfield and the second subfield are service subfields, the option field may include k service subfields, the k service subfields are in a one-to-one correspondence with the k services, and each service subfield carries service information of a service corresponding to the service subfield. The m flag bits are arranged in order, the k service subfields are arranged in order, and an arrangement order of the k subfields corresponds to an arrangement order of k flag bits corresponding to the k services.

In the technical solution provided in this application, the option field includes the service flag subfield, the first subfield corresponding to the first service, and the second subfield corresponding to the second service, the service flag subfield includes the first flag bit corresponding to the first service and the second flag bit corresponding to the second service, and the arrangement order of the first subfield and the second subfield corresponds to the arrangement order of the first flag bit and the second flag bit. Therefore, it is convenient for the network device to determine the first subfield and the second subfield based on the arrangement order of the first flag bit and the second flag bit, to determine the first service information and the second service information.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Because the first service information is the basic service information, the first service is a basic service. Optionally, the first service is different from all of the m services. That is, the basic service is different from the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value. For example, the length of the basic subfield is 8 bits, 16 bits, 32 bits, or 64 bits.

In the technical solution provided in this application, the basic subfield is set in the option field, and the basic service information is carried in the basic subfield, so that the option field can carry the basic service information.

Optionally, m≥4. To be specific, the packet including the option field may support at least four services.

Optionally, the option field further includes a reserved subfield, and the reserved subfield is adjacent to the service flag subfield.

In the technical solution provided in this application, because the reserved subfield is adjacent to the service flag subfield, the reserved subfield may support length extension of the service flag subfield, to support extension of a service subfield in the option field.

Optionally, a least significant bit of the reserved subfield is adjacent to a most significant bit of the service flag subfield.

In the technical solution provided in this application, the service flag subfield corresponds to the m services, the option field includes the k service subfields corresponding to the k services in the m services, the k service subfields are arranged in order, first k-1 service subfields in the k service subfields have a same length, and a length of the last service subfield is different from the lengths of the first k-1 service subfields. Compared with extending a service subfield after the last service subfield, extending a service subfield before the 1^{st} service subfield makes a smaller change to the option field, and extending a service subfield before the 1^{st} service subfield is more convenient. Therefore, in this application, a least significant bit of the reserved subfield is set to be adjacent to a most significant bit of the service flag subfield. In this way, if a service subfield needs to be extended in the option field, the service subfield is extended before the 1^{st} service subfield, and bits are extended starting from the most significant bit of the service flag subfield. This helps improve convenience of service subfield extension.

Optionally, the option field further includes a type subfield and a length subfield. The type subfield indicates a type of the option field, and the length subfield indicates a length of the option field.

Optionally, the packet is an IPv6 packet, the packet includes an IPv6 extension header, and the IPv6 extension header includes the option field.

In the technical solution provided in this application, service information of at least two different services is carried in a same option field of an IPv6 extension header of a same packet. Compared with the solution in which the option field is extended for each service, this application can reduce overheads caused by some fixed content in the option field. This helps reduce a length of the IPv6 extension header and reduce overheads of the IPv6 extension header.

Optionally, the IPv6 extension header includes either of a hop-by-hop header (hop by hop header, HBH) and a destination options header (destination options header, DOH). In this way, this application helps reduce a length of the HBH or the DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the first service information includes a path identifier, and the first service is a path-oriented service. For example, the first service is a path-oriented operations, administration, and maintenance (operations administration and maintenance, OAM) service, a path-oriented visualization service, a path-oriented traffic statistics service, a path-oriented performance measurement service, or the like.

Optionally, the network device supports the first service and the second service, and the method further includes: The network device processes the packet based on the second service information. For example, the second service information is carried in the second subfield. The network device first obtains the second service information from the second subfield, and then processes the packet based on the second service information.

Optionally, the network device supports the first service but does not support the second service, and the method further includes: The network device skips the second service information. For example, the second service information is carried in the second subfield. The network device skips the second subfield.

Optionally, that the network device processes the packet based on the first service information includes at least one of the following: The network device collects statistics about the packet based on the first service information; or the network device forwards the packet based on the first service information.

Optionally, that the network device processes the packet based on the first service information includes: The network device processes the packet based on the first service information and local configuration information associated with the first service. The local configuration information may be program instructions.

Optionally, the first service information and the second service information are arranged in order, and the network device processes the packet based on the arrangement order of the first service information and the second service information.

In the technical solution provided in this application, because the first service information and the second service information are arranged in order, in the process in which the network device processes the packet based on the option field included in the packet, if the network device does not support the first service and/or the second service, the network device may skip the first service information and/or the second service information, and directly process the packet based on a next piece of service information. This helps simplify processing logic of the network device.

According to a second aspect, a service processing method is provided. The method includes: A network device generates a packet including an option field, where the option field carries first service information and second service information, the first service information corresponds to a first service, the second service information corresponds to a second service, and the first service is different from the second service; and the network device sends the packet.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, both the length of the first subfield and the length of the second subfield are 8 bits, 16 bits, 32 bits, or 64 bits.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the packet is an IPv6 packet, the packet includes an IPv6 extension header, and the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the first service information includes a path identifier, and the first service is a path-oriented service. For example, the first service is a path-oriented OAM service, a path-oriented visualization service, a path-oriented traffic statistics service, a path-oriented performance measurement service, or the like.

Optionally, the network device supports the first service, and the method further includes: The network device processes the packet based on the first service information.

Optionally, the network device further supports the second service, and the method further includes: The network device processes the packet based on the second service information.

Optionally, the network device does not support the second service, and the method further includes: The network device skips the second service information.

Optionally, that the network device processes the packet based on the first service information includes at least one of the following: The network device collects statistics about the packet based on the first service information; or the network device forwards the packet based on the first service information.

Optionally, that the network device processes the packet based on the first service information includes: The network device processes the packet based on the first service information and local configuration information associated with the first service. The local configuration information may be program instructions.

Optionally, the first service information and the second service information are arranged in order. The network device processes, based on the arrangement order of the first service information and the second service information, the packet based on the first service information and the second service information.

Optionally, before the network device generates the packet including the option field, the method further includes: The network device receives indication information sent by a controller, where the indication information indicates the network device to generate the packet including the option field. Correspondingly, that a network device generates a packet including an option field includes: The network device generates, based on the indication information, the packet including the option field.

According to a third aspect which is an example not covered by the claims but useful for understanding the present invention, a service processing method is provided. The method includes: A controller sends indication information to a head node, where the indication information indicates the head node to generate a packet including an option field. The option field carries first service information and second service information, the first service information corresponds to a first service, the second service information corresponds to a second service, and the first service is different from the second service.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the first service information includes a path identifier, and the first service is a path-oriented service. For example, the first service is a path-oriented OAM service, a path-oriented visualization service, a path-oriented traffic statistics service, a path-oriented performance measurement service, or the like.

According to a fourth aspect which is another example not covered by the claims but useful for understanding the present invention, a service processing method is provided. The method includes: A head node receives indication information sent by a controller, where the indication information indicates the head node to generate a packet including an option field, where the option field carries first service information and second service information, the first service information corresponds to a first service, the second service information corresponds to a second service, and the first service is different from the second service; and the head node generates, based on the indication information, the packet including the option field.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field. That the head node generates, based on the indication information, the packet including the option field includes: The head node generates, based on the indication information, the IPv6 packet including the IPv6 extension header.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the first service information includes a path identifier, and the first service is a path-oriented service. For example, the first service is a path-oriented OAM service, a path-oriented visualization service, a path-oriented traffic statistics service, a path-oriented performance measurement service, or the like.

According to a fifth aspect, a service processing apparatus is provided. The apparatus is applied to a network device, and includes a transceiver module and a processing module. The transceiver module is configured to perform receiving and sending operations in the method according to any one of the first aspect to the fourth aspect or the optional implementations of the first aspect to the fourth aspect. The processing module is configured to perform an operation other than the receiving and sending operations in the method provided according to any one of the first aspect to the fourth aspect or the optional implementations of the first aspect to the fourth aspect. The receiving and sending operations may be a receiving and/or sending operation.

The apparatus includes:
the transceiver module, configured to receive a packet including an option field, where the option field carries first service information and second service information, the first service information corresponds to a first service, the second service information corresponds to a second service, and the first service is different from the second service; and
the processing module, configured to process the packet based on the first service information.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field further includes a type subfield and a length subfield. The type subfield indicates a type of the option field, and the length subfield indicates a length of the option field.

Optionally, the packet is an IPv6 packet, the packet includes an IPv6 extension header, and the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service includes an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the network device supports the first service and the second service, and the processing module is further configured to process the packet based on the second service information.

Optionally, the network device supports the first service but does not support the second service, and the processing module is further configured to skip the second service information.

Optionally, the processing module is configured to perform at least one of the following: collecting statistics about the packet based on the first service information; or forwarding the packet based on the first service information.

Optionally, the processing module is specifically configured to process the packet based on the first service information and local configuration information associated with the first service.

Optionally, the first service information and the second service information are arranged in order, and the processing module is specifically configured to process the packet based on the arrangement order of the first service information and the second service information.

According to a sixth aspect, a service processing apparatus is provided. The apparatus is applied to a network device, and includes:
a processing module, configured to generate a packet including an option field, where the option field carries first service information and second service information, the first service information corresponds to a first service, the second service information corresponds to a second service, and the first service is different from the second service; and
a transceiver module, configured to send the packet.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and
the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, both the length of the first subfield and the length of the second subfield are 8 bits, 16 bits, 32 bits, or 64 bits.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the packet is an IPv6 packet, the packet includes an IPv6 extension header, and the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service includes an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

Optionally, the network device supports the first service, and the processing module is further configured to process the packet based on the first service information.

Optionally, the network device further supports the second service, and the processing module is further configured to process the packet based on the second service information.

Optionally, the network device does not support the second service, and the processing module is further configured to skip the second service information.

Optionally, the processing module is configured to perform at least one of the following: collecting statistics about the packet based on the first service information; or forwarding the packet based on the first service information.

Optionally, the processing module is specifically configured to process the packet based on the first service information and local configuration information associated with the first service.

Optionally, the first service information and the second service information are arranged in order, and the processing module is specifically configured to process the packet based on the arrangement order of the first service information and the second service information.

Optionally, the transceiver module is further configured to receive indication information sent by a controller, where the indication information indicates the network device to generate the packet including the option field.

The processing module is specifically configured to generate, based on the indication information, the packet including the option field.

According to a seventh aspect which is another example not covered by the claims but useful for understanding the present invention, a service processing apparatus is provided. The apparatus is applied to a controller, and includes:
a transceiver module, configured to send indication information to a head node, where the indication information indicates the head node to generate a packet including an option field. The option field carries first service information and second service information, the first service information corresponds to a first service, the second service information corresponds to a second service, and the first service is different from the second service.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and
the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service includes an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

According to an eighth aspect which is another example not covered by the claims but useful for understanding the present invention, a service processing apparatus is provided. The apparatus is applied to a head node, and includes:
a transceiver module, configured to receive indication information sent by a controller, where the indication information indicates the head node to generate a packet including an option field. The option field carries first service information and second service information, the first service information corresponds to a first service, the second service information corresponds to a second service, and the first service is different from the second service; and
a processing module, configured to generate, based on the indication information, the packet including the option field.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and
the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field. The processing module is configured to generate, based on the indication information, the IPv6 packet including the IPv6 extension header.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service. The in-band flow measurement service includes an IFIT service or an IOAM service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

The modules in the fifth aspect to the eighth aspect may be implemented based on software, hardware, or a combination of software and hardware, and the modules may be randomly combined or divided based on specific implementation.

According to a ninth aspect which is another example not covered by the claims but useful for understanding the present invention, a service processing apparatus is provided, and includes a memory and a processor.

The memory is configured to store a computer program.

The processor is configured to execute the computer program stored in the memory, so that the service processing apparatus performs the service processing method according to any one of the first aspect or the optional implementations of the first aspect.

According to a tenth aspect which is another example not covered by the claims but useful for understanding the present invention, a service processing apparatus is provided, and includes a memory and a processor.

The memory is configured to store a computer program.

The processor is configured to execute the computer program stored in the memory, so that the service processing apparatus performs the service processing method according to any one of the second aspect or the optional implementations of the second aspect.

According to an eleventh aspect which is another example not covered by the claims but useful for understanding the present invention, a service processing apparatus is provided, and includes a memory and a processor.

The memory is configured to store a computer program.

The processor is configured to execute the computer program stored in the memory, so that the service processing apparatus performs the service processing method according to the third aspect.

According to a twelfth aspect which is another example not covered by the claims but useful for understanding the present invention, a service processing apparatus is provided, and includes a memory and a processor.

The memory is configured to store a computer program.

The processor is configured to execute the computer program stored in the memory, so that the service processing apparatus performs the service processing method according to the fourth aspect.

According to a thirteenth aspect, a service processing system is provided, and includes a first network device and a second network device.

The first network device is configured to: generate a packet including an option field, and send the packet to the second network device, where the option field carries first service information and second service information, the first service information corresponds to a first service, the second service information corresponds to a second service, and the first service is different from the second service.

The second network device is configured to: receive the packet, and process the packet based on the first service information.

Optionally, the service processing system further includes a controller, configured to send indication information to the first network device, where the indication information indicates the first network device to generate the packet including the option field.

Correspondingly, the first network device is configured to generate, based on the indication information, the packet including the option field.

Optionally, the first network device is a head node on a forwarding path of the packet, and the second network device is an intermediate node or a tail node on the forwarding path.

Optionally, the first network device is a head node or an intermediate node on a forwarding path of the packet, and the second network device is a tail node on the forwarding path.

Optionally, the service processing apparatus according to any one of the fifth aspect or the optional implementations of the fifth aspect may be used as an intermediate node or a tail node on the forwarding path of the packet, the service processing apparatus according to any one of the sixth aspect or the optional implementations of the sixth aspect may be used as a head node on the forwarding path of the packet, and the service processing apparatus according to any one of the seventh aspect or the optional implementations of the seventh aspect may be used as a controller.

Optionally, the service processing apparatus according to any one of the fifth aspect or the optional implementations of the fifth aspect may be used as a tail node on the forwarding path of the packet, the service processing apparatus according to any one of the sixth aspect or the optional implementations of the sixth aspect may be used as a head node or an intermediate node, and the service processing apparatus according to any one of the seventh aspect or the optional implementations of the seventh aspect may be used as a controller.

Optionally, the service processing apparatus according to any one of the seventh aspect or the optional implementations of the seventh aspect may be used as a controller, and the service processing apparatus according to any one of the eighth aspect or the optional implementations of the eighth aspect may be used as a head node.

Optionally, the service processing apparatus according to the ninth aspect may be used as an intermediate node or a tail node on the forwarding path of the packet, the service processing apparatus according to the tenth aspect may be used as a controller, the service processing apparatus according to the eleventh aspect that may be used as a head node on the forwarding path of the packet.

Optionally, the service processing apparatus according to the ninth aspect may be used as a tail node on the forwarding path of the packet, the service processing apparatus according to the tenth aspect may be used as a head node or an intermediate node on the forwarding path of the packet, and the service processing apparatus according to the eleventh aspect may be used as a controller.

Optionally, the service processing apparatus according to the eleventh aspect may be used as a controller, and the service processing apparatus according to the twelfth aspect may be used as a head node on the forwarding path of the packet.

According to a fourteenth aspect which is another example not covered by the claims but useful for understanding the present invention, a computer-readable storage medium is provided. The computer-readable storage medium stores a computer program. When the computer program is executed, the service processing method according to any one of the first aspect or the optional implementations of the first aspect is implemented, the service processing method according to any one of the second aspect or the optional implementations of the second aspect is implemented, the service processing method according to any one of the third aspect or the optional implementations of the third aspect is implemented, or the service processing method according to any one of the fourth aspect or the optional implementations of the fourth aspect is implemented.

According to a fifteenth aspect which is another example not covered by the claims but useful for understanding the present invention, a computer program product is provided. The computer program product includes a program or code. When the program or the code is executed, the service processing method according to any one of the first aspect or the optional implementations of the first aspect is implemented, the service processing method according to any one of the second aspect or the optional implementations of the second aspect is implemented, the service processing method according to any one of the third aspect or the optional implementations of the third aspect is implemented, or the service processing method according to any one of the fourth aspect or the optional implementations of the fourth aspect is implemented.

According to a sixteenth aspect which is another example not covered by the claims but useful for understanding the present invention, a chip is provided. The chip includes a programmable logic circuit and/or program instructions. When the chip runs, the service processing method according to any one of the first aspect or the optional implementations of the first aspect is implemented, the service processing method according to any one of the second aspect or the optional implementations of the second aspect is implemented, the service processing method according to any one of the third aspect or the optional implementations of the third aspect is implemented, or the service processing method according to any one of the fourth aspect or the optional implementations of the fourth aspect is implemented.

According to a seventeenth aspect which is another example not covered by the claims but useful for understanding the present invention, a data structure is provided. The data structure includes an option field, where the option field carries first service information and second service information, the first service information corresponds to a first service, the second service information corresponds to a second service, and the first service is different from the second service. That is, the same option field carries service information of at least two different services.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit in the m flag bits corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

For technical effects of the second aspect to the seventeenth aspect, refer to the first aspect. Details are not described herein again.

The technical solution provided in this application brings the following beneficial effects:

In the technical solution provided in this application, the same option field in the packet carries the first service information and the second service information, the first service information corresponds to the first service, the second service information corresponds to the second service, and the first service is different from the second service. That is, a same option field in a same packet carries service information of at least two different services. In other words, a same option field in a same packet can carry service information of at least two different services. Therefore, the option field does not need to be extended for each service. Compared with a current solution in which an option field is extended for each service, overheads caused by some fixed content in the option field can be reduced, to help reduce packet overheads.

In addition, in the current solution in which the option field is extended for each service, each option field usually further includes some optional subfields for alignment or future extension, and these optional subfields easily cause high packet overheads. In the technical solution provided in this application, a same option field in a same packet can carry service information of at least two different services. Compared with the current solution in which the option field is extended for each service, this application can reduce overheads caused by some optional subfields, and reduce packet overheads.

In addition, after obtaining (for example, receiving or generating) the packet, the network device usually needs to process the packet, for example, forward the packet or perform some service processing for the packet. In the current solution in which the option field is extended for each service, a packet length is large. As a result, packet processing complexity of a network device is high, and forwarding performance of the network device is low. In the technical solution provided in this application, a same option field in a same packet can carry service information of at least two different services. Therefore, a packet length can be reduced, thereby simplifying packet processing complexity of the network device, and improving forwarding performance of the network device.

### BRIEF DESCRIPTION OF DRAWINGS

FIG. 1 is a schematic diagram of a structure of an option field;
FIG. 2 is a schematic diagram of a structure of another option field;
FIG. 3 is a schematic diagram of a structure of still another option field;
FIG. 4 is a schematic diagram of a structure of an option data subfield in the option field shown in FIG. 3;
FIG. 5 is another schematic diagram of a structure of an option data subfield in the option field shown in FIG. 3;
FIG. 6 is still another schematic diagram of a structure of an option data subfield in the option field shown in FIG. 3;
FIG. 7 is yet another schematic diagram of a structure of an option data subfield in the option field shown in FIG. 3;
FIG. 8 is a schematic diagram of a structure of yet another option field;
FIG. 9 is a schematic diagram of a structure of yet another option field;
FIG. 10 is a schematic diagram of a structure of yet another option field;
FIG. 11 is a schematic diagram of an application scenario according to an embodiment of this application;
FIG. 12 is a schematic diagram of another application scenario according to an embodiment of this application;
FIG. 13 is a flowchart of a service processing method according to an embodiment of this application;
FIG. 14 is a schematic diagram of a structure of an option field according to an embodiment of this application;
FIG. 15 is a schematic diagram of a structure of another option field according to an embodiment of this application;
FIG. 16 is a schematic diagram of a structure of still another option field according to an embodiment of this application;
FIG. 17 is a schematic diagram of a structure of yet another option field according to an embodiment of this application;
FIG. 18 is a schematic diagram of a structure of a service flag subfield according to an embodiment of this application;
FIG. 19 is a schematic diagram of a structure of another service flag subfield according to an embodiment of this application;
FIG. 20 is a flowchart of another service processing method according to an embodiment of this application;
FIG. 21 is a flowchart of still another service processing method according to an embodiment of this application;
FIG. 22 is a flowchart of yet another service processing method according to an embodiment of this application;
FIG. 23 is a flowchart of processing a packet by a network device according to an embodiment of this application;
FIG. 24 is a schematic diagram of a service processing method according to an embodiment of this application;
FIG. 25 is a schematic diagram of a specific structure of an option field according to an embodiment of this application;
FIG. 26 is a schematic diagram of a structure of a service processing apparatus according to an embodiment of this application;
FIG. 27 is a schematic diagram of a structure of another service processing apparatus according to an embodiment of this application;
FIG. 28 is a schematic diagram of a structure of still another service processing apparatus according to an embodiment of this application;
FIG. 29 is a schematic diagram of a structure of yet another service processing apparatus according to an embodiment of this application;
FIG. 30 is a schematic diagram of a structure of yet another service processing apparatus according to an embodiment of this application;
FIG. 31 is a schematic diagram of a structure of yet another service processing apparatus according to an embodiment of this application; and
FIG. 32 is a schematic diagram of a structure of yet another service processing system according to an embodiment of this application.

### DESCRIPTION OF EMBODIMENTS

The following further describes in detail embodiments of this application with reference to accompanying drawings.

In development of current network technologies, a plurality of services can be carried out for an IPv6 packet. For example, these services may include a slice service, an in-band flow measurement service, an APN service, a DetNet service, and the like. Currently, different option fields are usually extended in an IPv6 extension header of the IPv6 packet for the foregoing services to carry service information of the corresponding services, so that the IPv6 packet can support the foregoing services. Option fields extended for different services are independent of each other.

It should be noted that, in this application, the slice service is a service related to a network slice. The in-band flow measurement service is a service related to in-band flow measurement. The APN service is a service related to application-aware networking. The DetNet service is a service related to deterministic networking. The in-band flow measurement service may include an IFIT service, an IOAM service, or the like. In different network scenarios, names of the slice service, the in-band flow measurement service, the APN service, and the DetNet service may be different. For example, in some network scenarios, the slice service is also referred to as a virtual transport network (virtual transport network, VTN) service.

The following describes service information of the foregoing services and the current option fields that carry the service information of the services.

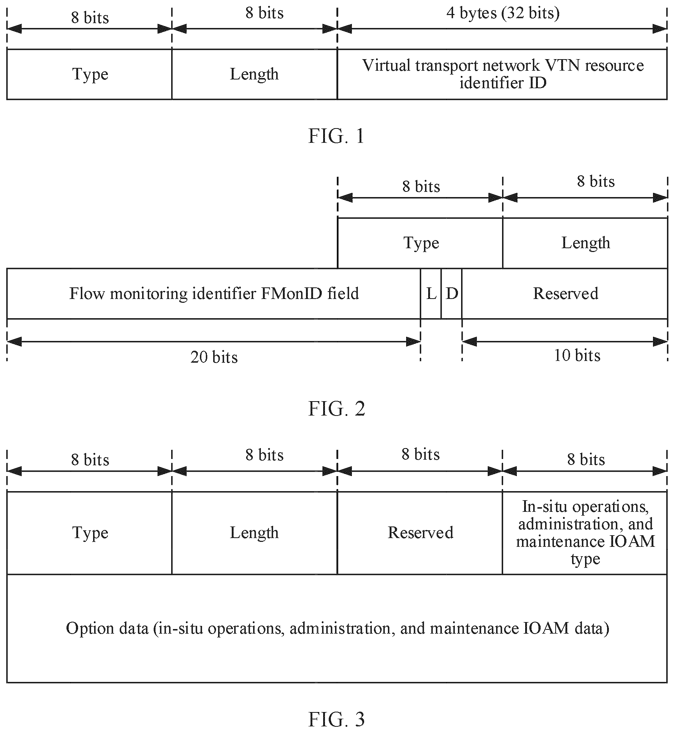

For example, service information of the slice service may include a slice identifier (slice identification, slice ID). For a VTN service, the slice identifier may be a VTN resource identifier (VTN resource ID). Currently, for an option field extended for the VTN service, refer to FIG. 1. As shown in FIG. 1, the option field includes a type subfield, a length subfield, and a VTN resource ID subfield. A length of the type subfield and a length of the length subfield both are 8 bits, and a length of the VTN resource ID subfield is 4 bytes. The type subfield indicates a type of the option field. The length subfield indicates a length of a data field (for example, the VTN resource ID subfield) of the option field. The VTN resource ID subfield is for carrying a VTN resource ID.

For example, service information of the IFIT service may include a flow identifier (flow identification, flow ID), a packet loss measurement (packet loss measurement) identifier, a delay measurement (packet delay measurement) identifier, and the like. The flow identifier may also be referred to as a flow label, a flow monitoring identifier (flow monitoring identification, FMonID), or the like, indicating a to-be-measured flow. Currently, for an option field extended for the IFIT service, refer to FIG. 2. As shown in FIG. 2, the option field includes a type subfield, a length subfield, an FMonID subfield, an L flag bit, a D flag bit, and a reserved subfield. A length of the type subfield and a length of the length subfield both are 8 bits, a length of the FMonID subfield is 20 bits, and a length of the reserved subfield is 10 bits. The type subfield indicates a type of the option field. The length subfield indicates a length of a data field (including the FMonID subfield, the L flag bit, the D flag bit, and the reserved subfield) of the option field. The FMonID subfield is for carrying FMonID. The L flag bit may be for carrying a packet loss measurement identifier, to indicate whether to perform packet loss measurement (for example, if a value of the L flag bit is 1, it indicates that packet loss measurement needs to be performed; or if a value of the L flag bit is 0, it indicates that packet loss measurement does not need to be performed). The D flag bit is for carrying a delay measurement identifier, to indicate whether to perform delay measurement (for example, if a value of the D flag bit is 1, it indicates that delay measurement needs to be performed; or if a value of the D flag bit is 1, it indicates that delay measurement does not need to be performed). In some embodiments, the L flag bit is for carrying the packet loss measurement identifier and the delay measurement identifier. If a value of the L flag bit is 1, it indicates that packet loss measurement and delay measurement need to be performed. If a value of the L flag bit is 0, it indicates that packet loss measurement and delay measurement do not need to be performed.

For example, the service information of the IOAM service may include a flow identifier, indicating a to-be-measured flow. Currently, for an option field extended for the IOAM service, refer to FIG. 3. As shown in FIG. 3, the option field includes a type subfield, a length subfield, a reserved subfield, an IOAM type subfield, and an option data subfield. A length of the type subfield, a length of the length subfield, a length of the reserved subfield, and a length of the IOAM type subfield are all 8 bits, and a length of the option data subfield is variable. The type subfield indicates a type of the option field. The length subfield indicates a length of the option field. The IOAM type subfield indicates a type of the option data subfield. The option data subfield is for carrying IOAM data. The IOAM data may include a flow identifier, a packet identifier, IOAM data of an IOAM node (a node supporting IOAM) on a packet forwarding path, and the like. IOAM data of any IOAM node may include a node identifier of the IOAM node, an ingress port through which a packet enters the IOAM node, an egress port through which the packet is output from the IOAM node, an ingress timestamp at which the packet enters the IOAM node, an egress timestamp at which the packet is output from the IOAM node, a transmission delay of the packet on the IOAM node, and the like.

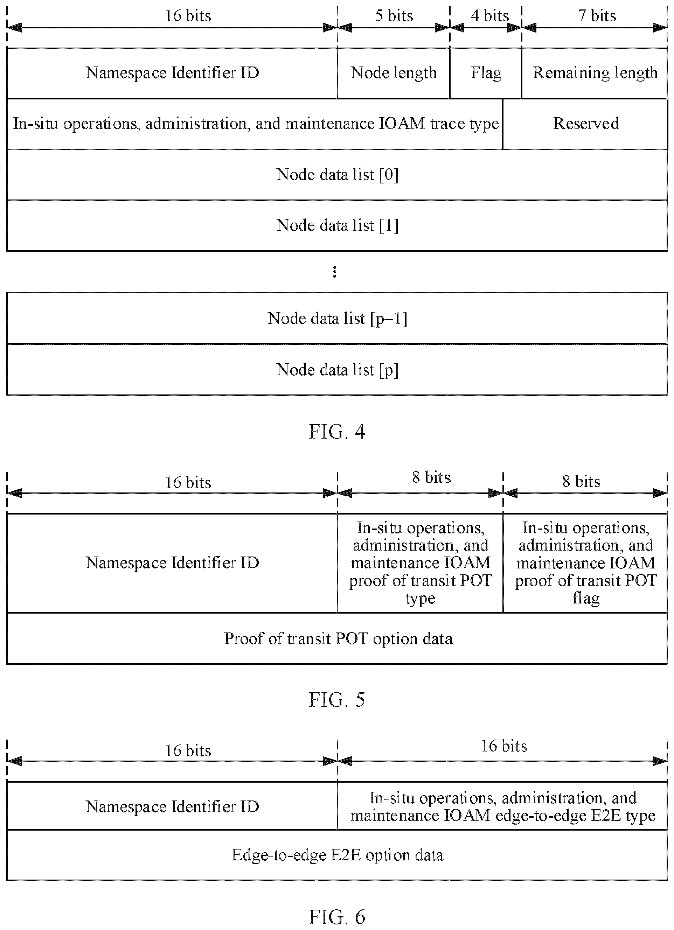

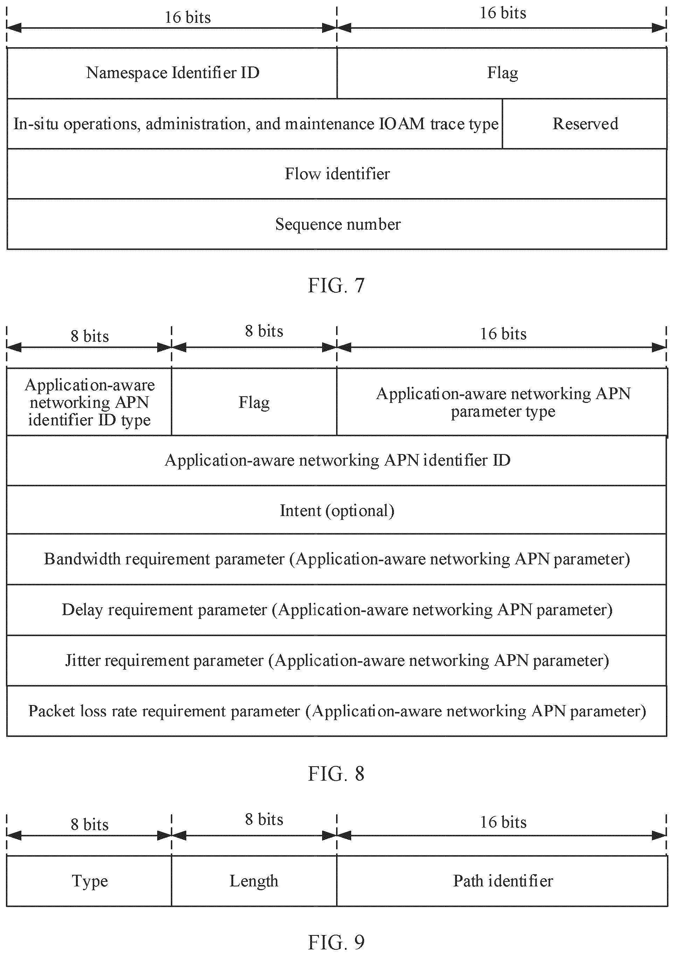

The type of the option data subfield may include an IOAM pre-allocated trace option type (IOAM pre-allocated trace option-type), an IOAM incremental trace option type (IOAM incremental trace option-type), an IOAM proof of transit option type (IOAM proof of transit option-type, IOAM POT option-type), an IOAM edge-to-edge option type (IOAM edge-to-edge option-type, IOAM E2E option-type), and an IOAM direct export option type (IOAM direct export option-Type, IOAM DEX option-type). Different types of option data subfields have different formats. For example, when the type of the option data subfield is an IOAM pre-allocated trace option type or an IOAM incremental trace option type, a format of the option data subfield may be shown in FIG. 4. When the type of the option data subfield is an IOAM POT option type, a format of the option data subfield may be shown in FIG. 5. When the type of the option data subfield is an IOAM E2E option type, a format of the option data subfield may be shown in FIG. 6. When the type of the option data subfield is an IOAM DEX option type, a format of the option data subfield may be shown in FIG. 7.

Refer to FIG. 4. When the type of the option data subfield is an IOAM pre-allocated trace option type or an IOAM incremental trace option type, the option data subfield includes a namespace (namespace) ID subfield, a node length (nodelen) subfield, a flag (flags) subfield, a remaining length (remaininglen) subfield, an IOAM trace type subfield, a reserved subfield, and p node data list (node data list) subfields. A length of the namespace ID subfield is 16 bits, a length of the node length subfield is 5 bits, a length of the flag subfield is 4 bits, a length of the remaining length subfield is 7 bits, a length of the IOAM trace type subfield is 24 bits, a length of the reserved subfield is 8 bits, and a length of the node data list field is 32 bits. The namespace ID subfield is for carrying a namespace ID. The node length subfield indicates the IOAM node to add data to the option data subfield by a multiple of 4 bytes. The remaining length subfield indicates the IOAM node to add data to the option data subfield at a multiple of the remaining 4 bytes. The IOAM trace type subfield indicates a data type in the node data list. The p node data list subfields correspond to p IOAM nodes, and each node data list subfield is for carrying IOAM data of a corresponding IOAM node. The IOAM data includes a node identifier, an ingress timestamp at which a packet enters the IOAM node, an egress timestamp at which the packet is output from the IOAM node, and the like.

Refer to FIG. 5. When the type of the option data subfield is an IOAM POT option type, the option data subfield includes a namespace ID subfield, an IOAM POT type subfield, an IOAM POT flag subfield, and a POT option data subfield. A length of the namespace ID subfield is 16 bits, a length of the IOAM POT type subfield and a length of the IOAM POT flag subfield are both 8 bits, and a length of the POT option data subfield is variable. The namespace ID subfield is for carrying a namespace ID. The IOAM POT type subfield is for carrying an IOAM POT type. The IOAM POT flag subfield is for carrying an IOAM POT flag, and the POT option data subfield is for carrying IOAM POT data, where the IOAM POT data includes a packet identifier and the like.

Refer to FIG. 6. When the type of the option data subfield is an IOAM E2E option type, the option data subfield includes a namespace ID subfield, an IOAM E2E type subfield, and an E2E option data subfield. Both a length of the namespace ID subfield and a length of the IOAM E2E type subfield are 16 bits, and a length of the E2E option data subfield is variable. The namespace ID subfield is for carrying a namespace ID. The IOAM E2E type subfield is for carrying an IOAM E2E type. The E2E option data subfield is for carrying IOAM E2E data, where the IOAM E2E data includes a packet group sequence number (sequence number) for detecting a packet loss, packet reordering, packet repetition in a group, and the like. The IOAM E2E data may further include an ingress timestamp at which a packet enters the IOAM node, an egress timestamp at which a packet is output from the IOAM node, and the like that are for detecting a packet transmission delay.

Refer to FIG. 7. When the type of the option data subfield is an IOAM DEX option type, the option data subfield includes a namespace ID subfield, a flag subfield, an IOAM trace type subfield, a reserved subfield, a flow identifier subfield, and a sequence number subfield. Both a length of the namespace ID subfield and a length of the flag subfield are 16 bits, a length of the IOAM trace type subfield is 24 bits, a length of the reserved subfield is 8 bits, and both a length of the flow identifier subfield and a length of the sequence number subfield are 32 bits. The namespace ID subfield is for carrying an IOAM namespace. The flag subfield is for carrying an IOAM DEX flag. The IOAM type subfield indicates which data fields should be output. The flow identifier field is for carrying a flow identifier. The sequence number subfield is for carrying a packet group sequence number for detecting a packet loss, packet reordering, packet repetition in a group, and the like.

For example, service information of the APN service may include an APN attribute (attribute). The APN attributes may include an APN ID and APN parameters (parameters). The APN ID may include a user group identifier (user group identification, user group ID) and an application group identifier (application group identification, APP group ID). The APN parameters include a network performance parameter, and the network performance parameter may include at least one of a bandwidth requirement parameter, a delay requirement parameter, a jitter requirement parameter, and a packet loss rate requirement parameter. An example in which the APN parameters include a bandwidth requirement parameter, a delay requirement parameter, a jitter requirement parameter, and a packet loss rate requirement parameter is used for description. Currently, for an option field extended for the APN service, refer to FIG. 8. As shown in FIG. 8, the option field includes an APN ID type subfield, a flag subfield, an APN parameter type subfield, an APN ID subfield, an intent (intent) subfield, a bandwidth requirement parameter subfield, a delay requirement parameter subfield, a jitter requirement parameter subfield, and a packet loss rate requirement parameter subfield. Both a length of the APN ID type subfield and a length of the flag subfield are 8 bits, a length of the APN parameter type subfield is 16 bits, a length of the APN ID subfield is 32 bits or 128 bits, and a length of the intent subfield, a length of the bandwidth requirement parameter subfield, a length of the delay requirement parameter subfield, a length of the jitter requirement parameter subfield, a length of the packet loss rate requirement parameter subfield are all 32 bits. The APN ID type subfield indicates an APN ID type. The APN ID type includes a short APN ID and a long APN ID. A length of the APN ID subfield carrying the short APN ID is 32 bits, and a length of the APN ID subfield carrying the long APN ID is 128 bits. The flag subfield is for carrying a future defined version. The APN parameter type subfield indicates which APN parameters are carried in the option field. For example, in bits arranged from a most significant bit to a least significant bit in the APN parameter type subfield, the 1^{st} bit corresponds to a bandwidth requirement, the 2^{nd} bit corresponds to a delay requirement, the 3^{rd} bit corresponds to a jitter requirement, and the 4^{th} bit corresponds to a packet loss rate requirement. When the 1^{st} bit is set to 1, it indicates that the option field carries a bandwidth requirement parameter. When the 2^{nd} bit is set to 1, it indicates that the option field carries the delay requirement parameter. When the 3^{rd} bit is set to 1, it indicates that the option field carries the jitter requirement parameter. When the 4^{th} bit is set to 1, it indicates that the option field carries the packet loss rate requirement parameter. The APN ID subfield is for carrying an APN ID. The APN ID subfield may include an application group identifier space and a user group identifier space, and may further include a reserved space. The application group identifier space is for carrying an application group identifier. The user group identifier space is for carrying a user group identifier. Both a length of the application group identifier space and a length of the user group identifier space are variable. The intent subfield is an optional subfield, and indicates a group of service requirements for a network. The bandwidth requirement parameter subfield is for carrying the bandwidth requirement parameter. The delay requirement parameter subfield is for carrying the delay requirement parameter. For example, the delay requirement parameter subfield includes a 24-bit delay requirement space and an 8-bit reserved space, and the delay requirement space is for carrying the delay requirement parameter. The jitter requirement parameter subfield is for carrying the jitter requirement parameter. For example, the jitter requirement parameter subfield includes a 24-bit jitter requirement space and an 8-bit reserved space, and the jitter requirement space is for carrying the jitter requirement parameter. The packet loss rate requirement parameter subfield is for carrying the packet loss rate requirement parameter. For example, the packet loss rate requirement parameter subfield includes a 24-bit packet loss rate requirement space and an 8-bit reserved space, and the packet loss rate requirement space is for carrying the packet loss rate requirement parameter.

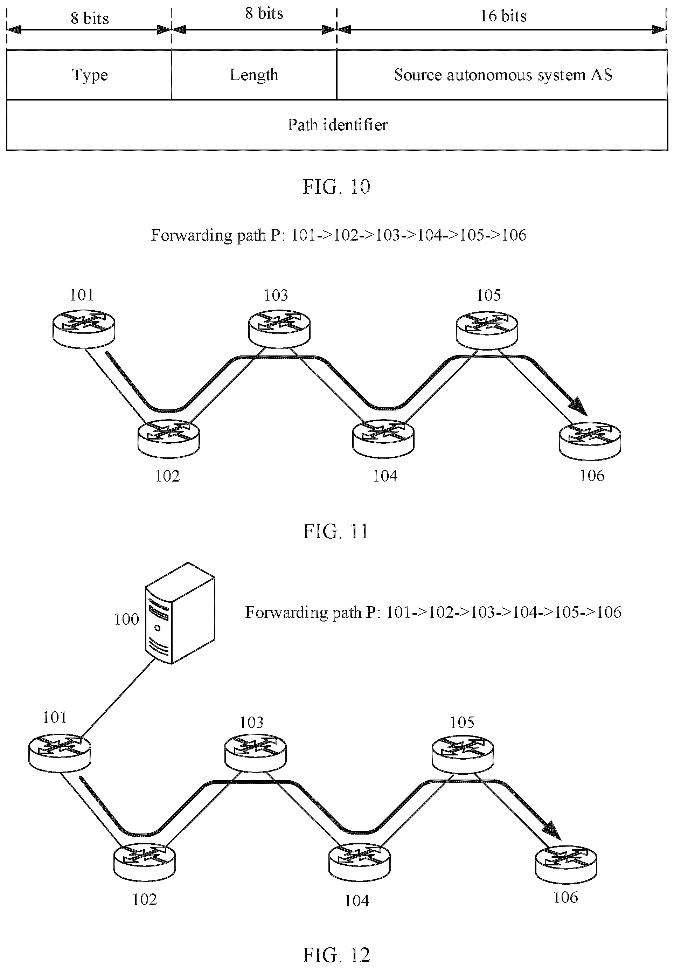

For example, service information of the DetNet service may include a path identifier (path identification, path ID), indicating a forwarding path that the packet is to pass through. Currently, for an option field extended for the DetNet service, refer to FIG. 9 or FIG. 10. The option field shown in FIG. 9 is a DetNet strict path (strict path) option field. As shown in FIG. 9, the option field includes a type subfield, a length subfield, and a path identifier subfield. Both a length of the type subfield and a length of the length subfield are 8 bits, and a length of the path identifier subfield is 16 bits. The type subfield indicates a type of the option field. The length subfield indicates a length of the option field. The path identifier subfield is for carrying a path identifier, and the path identifier indicates a strict path. The option field shown in FIG. 10 is a DetNet loose path (loose path) option field. As shown in FIG. 10, the option field includes a type subfield, a length subfield, a source autonomous system (autonomous system, AS) subfield, and a path identifier subfield. A length of the type subfield and a length of the length subfield are both 8 bits, a length of the source AS subfield is 16 bits, and a length of the path identifier subfield is 32 bits. The type subfield indicates a type of the option field. The length subfield indicates a length of the option field. The source AS subfield indicates an AS of a path origin. The path identifier subfield is for carrying a path identifier, where the path identifier indicates a loose path.

Currently, when an IPv6 packet needs to support all of a slice service, an IFIT service, and an APN service, an option field needs to be separately extended for the slice service, the IFIT service, and the APN service in an IPv6 extension header of the IPv6 packet (for example, three option fields need to be extended, and the three option fields are in a one-to-one correspondence with the slice service, the IFIT service, and the APN service). In addition, service information of the slice service is carried in the option field corresponding to the slice service, service information of the IFIT service is carried in the option field corresponding to the IFIT service, and service information of the APN service is carried in the option field corresponding to the APN service. For example, the option field shown in FIG. 1 needs to be extended for the slice service, the option field shown in FIG. 2 needs to be extended for the IFIT service, and the option field shown in FIG. 8 needs to be extended for the APN service.

However, according to a protocol, the option field needs to include a type (type) subfield, a length (length) subfield, and the like to describe fixed content of the option field (for example, the option fields shown in FIG. 1 to FIG. 3, FIG. 9, and FIG. 10 all include a type subfield and a length subfield). When the option field is extended for each service, each extended option field includes the fixed content. As a result, a length of the IPv6 extension header is large, overheads of the IPv6 extension header are high, and overheads of the IPv6 packet are high. In addition, the option field usually further includes some optional subfields for alignment or future extension (for example, the option fields shown in FIG. 2 and FIG. 3 both include a reserved subfield, and the reserved subfield may be for alignment or future extension). These optional subfields also cause a large length of the IPv6 extension header, thereby causing high overheads of an IPv6 packet. For example, when an IPv6 packet needs to support all of a slice service, an IFIT service, and an APN service, according to a current processing manner, three option fields need to be extended in an IPv6 extension header of the IPv6 packet, and a length of the IPv6 extension header is at least 70 bytes. In addition, in a process of forwarding an IPv6 packet, a network device needs to process the IPv6 packet, and a length of an IPv6 extension header is increased. This easily increases complexity of processing the IPv6 packet by the network device, and causes a decrease in forwarding performance of the network device.

Embodiments of this application provide a technical solution. A same option field can carry service information of at least two different services. Compared with a solution in which an option field is extended for each service, this application can reduce overheads caused by some fixed content (for example, a type subfield and a length subfield) in the option field, thereby helping reduce packet overheads. In addition, overheads caused by some optional subfields in the option field can be reduced. According to the technical solutions in embodiments of this application, a packet length can be reduced, thereby simplifying packet processing complexity of the network device, and improving forwarding performance of the network device.

The following describes the technical solution in embodiments of this application. An application scenario of embodiments of this application is first described.

FIG. 11 is a schematic diagram of an application scenario according to an embodiment of this application. This application scenario provides a communication network, for example, the communication network is an IPv6 network. The communication network includes a plurality of network devices 101 to 106 (to be specific, the network device 101, the network device 102, the network device 103, the network device 104, the network device 105, and the network device 106), and the network devices 101 to 106 are sequentially connected. The network devices 101 to 106 may be configured to forward a packet. For example, the network devices 101 to 106 include an edge network device, the edge network device may be used by a workstation to access the communication network, and the network devices 101 to 106 may be configured to forward a packet between different workstations accessing the communication network, to implement communication between the different workstations.

Each network device in the network devices 101 to 106 may be a device such as a switch, a router (router), a virtual switch, or a virtual router. The network devices 101 to 106 may be a same network device. For example, the network devices 101 to 106 are all routers. Alternatively, at least two of the network devices 101 to 106 are different network devices. For example, some of the network devices 101 to 106 are routers, and the other are switches. The workstation accessing the communication network may be a host, a server, a base station, a virtual machine (virtual machine, VM), or the like. The host may be a smartphone, a tablet computer, a desktop computer, an internet of things (internet of things, IoT) device, or the like. This is not limited in this embodiment of this application.

The communication network includes a forwarding path for forwarding a packet, and the forwarding path may include a plurality of network devices. According to a forwarding direction of the packet, the network devices on the forwarding path include an ingress (ingress) device, an egress (egress) device, and at least one transit (transit) device located between the ingress device and the egress device. The packet flows into the forwarding path through the ingress device, and flows out of the forwarding path through the egress device. A quantity of transit devices on the forwarding path varies based on a length of the forwarding path, or the forwarding path includes only the ingress device and the egress device, but does not include a transit device. In some implementation scenarios, the network device is also referred to as a network node, a gateway device, a routing node, a routing device, or the like; the ingress device is also referred to as a first node, a first node device, a head node, a head node device, or the like; the egress device is also referred to as a tail node, a tail node device, or the like; the transit device is also referred to as a transit node, an intermediate node, an intermediate node device, or the like; the forwarding path may also be referred to as a transmission path, a communication link, a communication path, a communication tunnel, a tunnel, or the like. As shown in FIG. 11, the communication network includes a forwarding path P, and the forwarding path P is: network device 101 -> network device 102 -> network device 103 -> network device 104 -> network device 105 -> network device 106. The network device 101 is a head node on the forwarding path P, the network device 106 is a tail node on the forwarding path P, and all the network devices 102 to 105 are intermediate nodes on the forwarding path P.

In this embodiment of this application, a same option field can carry service information of at least two different services, and a network device on the forwarding path may generate a packet including the option field. For example, the head node on the forwarding path adds the option field to an initial packet to obtain the packet including the option field, or a packet received by an intermediate node on the forwarding path includes the option field, and the intermediate node modifies the packet to obtain the packet including the option field. Herein, an example in which the head node generates the packet including the option field is used for description. After generating the packet including the option field, the head node may send the packet to a next-hop device of the head node. After receiving the packet including the option field, the next-hop device may process the packet based on service information carried in the option field to obtain a processed packet, where the processed packet includes the option field. After obtaining the processed packet, the next-hop device may send the processed packet to a next-hop device of the next-hop device. After receiving the packet including the option field, the next-hop device of the next-hop device may process the packet based on service information carried in the option field. This process is repeated until the packet including the option field is forwarded to the tail node. The tail node may process the packet based on service information carried in the option field in the received packet, and the tail node may further remove the option field from the packet. For example, as shown in FIG. 11, the network device 101 serving as the head node may generate the packet including the option field, and send the packet to the network device 102. Then, the packet including the option field is forwarded to the network device 106 serving as the tail node by successively passing through the network device 102, the network device 103, the network device 104, and the network device 105. Each of the network device 101 to the network device 106 may process the packet based on service information carried in the option field in the received packet. The network device 106 serving as the tail node may further remove the option field from the packet.

In a specific implementation of this application, the head node maintains the option field, and the head node generates, based on the option field, the packet including the option field. Alternatively, in another specific implementation of this application, the head node generates, based on indication information sent by a controller, the packet including the option field. In the another specific implementation, the application scenario provided in this embodiment of this application further includes a controller. The controller is connected to the head node, and the controller may send indication information to the head node, to indicate the head node to generate the packet including the option field. For example, FIG. 12 is a schematic diagram of another application scenario according to an embodiment of this application. The application scenario provides a communication network. The communication network further includes a controller 100. The controller 100 is connected to the network device 101. The controller 100 may further be connected to at least one of a controller 102 to a controller 106 (not shown in FIG. 12). This is not limited in this embodiment of this application.

The controller 100 may integrate functions such as network management, service control, and network analysis. The controller 100 may be a function module deployed in a server, may be a server, may be a server cluster including several servers, may be a cloud computing service center, or may be another device or module that has a network control function.

The controller 100 may generate indication information, and send the indication information to the network device 101. The network device 101 may generate, based on the indication information, a packet including the option field. Optionally, the indication information is indication information (for example, an identifier of the option field) of the option field. The indication information indicates the option field. The network device 101 may maintain a plurality of option fields. The network device 101 determines, based on the indication information, the option field indicated by the indication information in the plurality of option fields maintained by the network device 101, and then generates the packet including the option field. Alternatively, the indication information includes configuration information of the option field, and the network device 101 generates the option field based on the indication information, to generate the packet including the option field. Alternatively, the indication information includes the option field, and the network device 101 generates, based on the indication information, the packet including the option field. This is not limited in this embodiment of this application.

It should be noted that the application scenarios shown in FIG. 11 and FIG. 12 are merely used as examples and are not intended to limit the technical solutions of this application. In an implementation process, the controller may also be integrated into a network device. For example, the controller is integrated into a head node. The communication network may include more or fewer devices than those shown in FIG. 11 and FIG. 12. A quantity of network devices and a quantity of controllers may be configured based on a requirement. This is not limited in this embodiment of this application.

The foregoing describes the application scenarios of this application, and the following describes embodiments of a service processing method of this application.

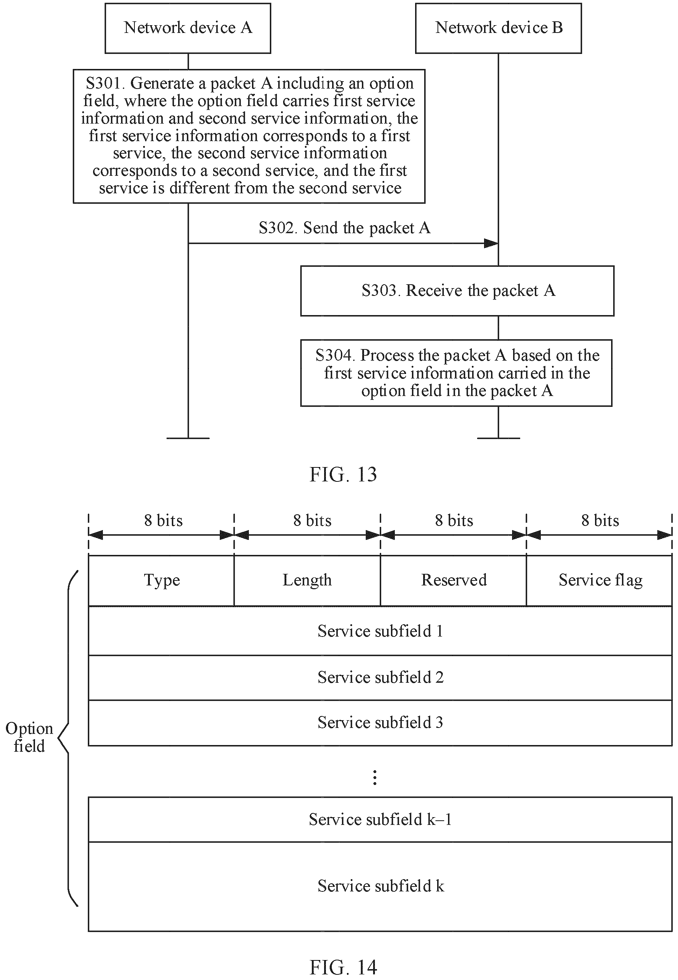

FIG. 13 is a flowchart of a service processing method according to an embodiment of this application. The method may be applied to a service processing system including a network device A and a network device B. For example, the service processing system is the communication network shown in FIG. 11 or FIG. 12. The network device A may be the network device 101, and the network device B may be any one of the network device 102 to the network device 106. As shown in FIG. 13, the method includes the following steps S301 to S304.

S301. The network device A generates a packet A including an option field, where the option field carries first service information and second service information, the first service information corresponds to a first service, the second service information corresponds to a second service, and the first service is different from the second service.

In a specific implementation, the network device A is a head node, and the network device A adds the option field to an initial packet from a workstation (for example, a host) that accesses the network device A to obtain the packet A including the option field. In another specific implementation, the network device A is an intermediate node, a packet B received by the network device A from a previous-hop device of the network device A includes the option field, and the network device A may modify the packet B to obtain the packet A including the option field. For example, the network device A modifies the option field included in the packet B. Specifically, the network device A modifies information carried in the option field included in the packet B. This is not limited in this embodiment of this application.

In this embodiment of this application, the packet A may be an IPv6 packet, the packet A includes an IPv6 extension header, and the option field may be located in the IPv6 extension header. In an example, the network device A is a head node, and the network device A encapsulates the IPv6 extension header including the option field into an initial packet to obtain the packet A. Alternatively, an initial packet includes an IPv6 extension header, and the network device A adds the option field to the IPv6 extension header of the initial packet to obtain the packet A. In another example, the network device A is an intermediate node, a packet B received by the network device A from a previous-hop device of the network device A includes an IPv6 extension header, and the IPv6 extension header includes the option field. The network device A modifies the IPv6 extension header to obtain the packet A.

In an IPv6 technology, an IPv6 extension header may include an HBH, a DOH, a routing header (routing header, RH), a fragment header (fragment header, FH), and the like. In addition, based on a service requirement, an IPv6 packet may include at least one IPv6 extension header. In this embodiment of this application, the IPv6 extension header including the option field may be an HBH or a DOH. That is, the option field may be located in the HBH or the DOH. For example, the packet A includes an HBH, and the option field may be located in the HBH. Alternatively, the packet A includes a DOH, and the option field may be located in the DOH. In an example, the packet A includes an RH and two DOHs, one of the two DOHs is located before the RH, and the other DOH is located after the RH (for example, the DOH located before the RH is referred to as the 1^{st} DOH, and the DOH located after the RH is referred to as the 2^{nd} DOH). The option field may be located in the 1^{st} DOH, or may be located in the 2^{nd} DOH. If the option field is located in the HBH, each network device that receives the packet A may process the packet A based on the option field. If the option field is located in the 1^{st} DOH, each network device that receives the packet A and hits a destination address of the packet A may process the packet A based on the option field. If the option field is located in the 2^{nd} DOH, only the tail node needs to process the packet A based on the option field.

In a specific implementation, the option field may include a first subfield and a second subfield, the first subfield may correspond to the first service, the second subfield may correspond to the second service, the first subfield carries the first service information, and the second subfield carries the second service information, so that the option field carries the first service information and the second service information. Both a length of the first subfield and a length of the second subfield may be fixed values, and the length of the first subfield may be the same as the length of the second subfield. Optionally, both the length of the first subfield and the length of the second subfield are 2n bits, where n is an integer greater than or equal to 3. For example, n is equal to 3, 4, 5, or 6. Correspondingly, 2n is equal to 8, 16, 32, or 64. In other words, both the length of the first subfield and the length of the second subfield may be 8 bits, 16 bits, 32 bits, or 64 bits. In a specific example, both the length of the first subfield and the length of the second subfield are 32 bits.

In a specific implementation, the option field further includes a third subfield, the third subfield carries third service information, the third service information corresponds to a third service, and the first service, the second service, and the third service are different from each other. For example, the first service is a slice service, the second service is an APN service, and the third service is an IFIT service. The first subfield, the second subfield, and the third subfield may be sequentially arranged, a length of the third subfield is variable, and the length of the third subfield may be different from the length of the first subfield. For example, the length of the third subfield is greater than the length of the first subfield. In another embodiment, the length of the third subfield may alternatively be less than or equal to the length of the first subfield. This is not limited in this embodiment of this application.

It can be learned from the foregoing descriptions that the first subfield, the second subfield, and the third subfield are all for carrying service information. Therefore, the first subfield, the second subfield, and the third subfield may all be referred to as a service subfield. In some embodiments, the service subfield is also referred to as a space (space) or a container (container). For example, the first subfield may be referred to as a first space or a first container, the second subfield may be referred to as a second space or a second container, and the third subfield may be referred to as a third space or a third container. In a specific implementation, the option field includes k service subfields, the k service subfields are in a one-to-one correspondence with k services, the k services are different from each other, and k is a positive integer. The k service subfields may be sequentially arranged. Lengths of first k-1 service subfields in the k service subfields may be the same, and a length of a k^{th} service subfield (that is, the last service subfield) may be different from the lengths of the first k-1 service subfields. The first subfield and the second subfield may be two service subfields in the first k-1 service subfields, and the third subfield may be the k^{th} service subfield.

In a specific implementation, the option field further includes a fourth subfield, and the fourth subfield indicates the length of the first subfield and the length of the second subfield. For example, the fourth subfield indicates that both the length of the first subfield and the length of the second subfield are 32 bits. That the fourth subfield indicates the length of the first subfield and the length of the second subfield means that a value of the fourth subfield indicates the length of the first subfield and the length of the second subfield. Optionally, the option field includes the k service subfields, the first k-1 service subfields in the k service subfields include the first subfield and the second subfield, and the fourth subfield may indicate the lengths of the first k-1 service subfields, so that the fourth subfield may indicate the length of the first subfield and the length of the second subfield. Because the fourth subfield indicates the length of the service subfield, the fourth subfield may also be referred to as a length flag subfield or a length indication subfield. This is not limited in this embodiment of this application.

In a specific implementation, the option field includes a service flag subfield, the service flag subfield corresponds to m services, the service flag subfield indicates that the option field carries service information of k services in the m services, the m services are different from each other, m is a positive integer, and k is an integer less than or equal to m. Optionally, m≥4. For example, m=8.

In a specific implementation, the service flag subfield indicates that the option field includes the k service subfields that are in a one-to-one correspondence with the k services, and the k service subfields carry the service information of the k services in a one-to-one correspondence, so that the service flag subfield indicates that the option field carries the service information of the k services. The lengths of the first k-1 service subfields in the k service subfields may be the same, and the length of the last service subfield may be different from the lengths of the first k-1 service subfields. In another implementation, the length of the last service subfield may also be the same as the lengths of the first k-1 service subfields. This is not limited in this embodiment of this application. In this embodiment of this application, because the service flag subfield indicates that the option field carries the service information, the service flag subfield may also be referred to as a service indication subfield.

In a specific implementation, the service flag subfield includes m flag bits, the m flag bits are in a one-to-one correspondence with the m services, and each flag bit indicates whether the option field carries service information of a service corresponding to the flag bit. For example, a value of each flag bit may be 0 or 1, where "1" indicates that the option field carries the service information of the service corresponding to the flag bit, and "0" indicates that the option field does not carry the service information of the service corresponding to the flag bit. The m flag bits may be arranged in order, the service information of the k services carried in the option field may be arranged in order, and an arrangement order of the service information of the k services may correspond to an arrangement order of the m flag bits. For example, the service information of the k services is carried in the k service subfields in a one-to-one correspondence, the k service subfields are arranged in order, and an arrangement order of the k service subfields corresponds to the arrangement order of the m flag bits. In this embodiment of this application, the m flag bits may be arranged in an order from a most significant bit to a least significant bit, or may be arranged in an order from a least significant bit to a most significant bit. The k service subfields are sequentially arranged in a direction from a part close to the service flag subfield to a part away from the service flag subfield (for example, in a direction from the 1^{st} 32 bits close to the option field to the 1^{st} 32 bits far away from the option field). That an arrangement order of the k service subfields corresponds to the arrangement order of the m flag bits includes: The arrangement order of the k service subfields corresponds to an arrangement order of the m flag bits from a most significant bit to a least significant bit. In other words, the k service subfields correspond to the m flag bits in a sequential order. Alternatively, the arrangement order of the k service subfields corresponds to an arrangement order of the m flag bits from a least significant bit to a most significant bit. In other words, the k service subfields correspond to the m flag bits in a reverse order. This is not limited in this embodiment of this application.

In a first specific implementation of this application, the m services corresponding to the service flag subfield include the first service and the second service, and the service flag subfield indicates that the option field carries the first service information and the second service information. For example, the service flag subfield indicates that the option field carries the service information of the k services in the m services, and the k services include the first service and the second service. Therefore, the service flag subfield indicates that the option field carries the first service information and the second service information. For example, the m flag bits in the service flag subfield include a first flag bit and a second flag bit, where the first flag bit corresponds to the first service, the second flag bit corresponds to the second service, the first flag bit indicates that the option field carries the first service information, and the second flag bit indicates that the option field carries the second service information. The first flag bit and the second flag bit may be arranged in order, the first service information and the second service information may be arranged in order, and an arrangement order of the first service information and the second service information corresponds to an arrangement order of the first flag bit and the second flag bit. For example, the arrangement order of the first service information and the second service information corresponds to an arrangement order of the first flag bit and the second flag bit from a most significant bit to a least significant bit, or the arrangement order of the first service information and the second service information corresponds to an arrangement order of the first flag bit and the second flag bit from a least significant bit to a most significant bit. This is not limited in this embodiment of this application.

In this embodiment of this application, the option field may carry basic service information, the basic service information corresponds to a basic service, the basic service may be any one of a slice service, an in-band flow measurement service, and a DetNet service, and the in-band flow measurement may include an IFIT service or an IOAM service. The basic service may belong to the m services corresponding to the service flag subfield, or may not belong to the m services corresponding to the service flag subfield. In a specific implementation, the basic service belongs to the m services corresponding to the service flag subfield, and the basic service may be any one of the k services. For example, the basic service is the first service, and the basic service information is the first service information. For content of the option field, refer to the first specific implementation. In another specific implementation, the basic service does not belong to the m services corresponding to the service flag subfield. For example, the basic service is the first service, the basic service information is the first service information, but the first service does not belong to the m services corresponding to the service flag subfield. For content of the option field, refer to the following second specific implementation.

In the second specific implementation of this application, the first service is a basic service, the first service information is basic service information, the m services corresponding to the service flag subfield include the second service, and the service flag subfield indicates that the option field carries the second service information. For example, the service flag subfield indicates that the option field carries the service information of the k services in the m services, and the k services include the second service. Therefore, the service flag subfield indicates that the option field carries the second service information. For example, the m flag bits in the service flag subfield include a second flag bit, where the second flag bit corresponds to the second service, and the second flag bit indicates that the option field carries the second service information.

The second service information may be located after the basic service information. For example, the service information of the k services may all be located after the basic service information (that is, the first service information), and the service information of the k services is arranged in order. In a specific implementation, the option field includes a basic subfield (for example, the first subfield is the basic subfield) and the k service subfields that are in a one-to-one correspondence with the k services, the basic subfield carries the basic service information, and the k service subfields are arranged in order after the basic subfield. A length of the basic subfield is a fixed value. For example, the length of the basic subfield is 8 bits, 16 bits, 32 bits, or 64 bits. The length of the basic subfield may be equal to the lengths of the first k-1 service subfields in the k service subfields. For example, both the length of the basic subfield and the lengths of the first k-1 service subfields are 32 bits. In another implementation, a length of the basic subfield is variable, and the length of the basic subfield may not be equal to the lengths of the first k-1 service subfields. This is not limited in this embodiment of this application.

In the second specific implementation, the option field carries the basic service information, but the basic service information is not indicated by the service flag subfield. In other words, in the second specific implementation, the option field usually definitely carries the basic service information, or in other words, the option field carries the basic service information by default.

In a specific implementation, the option field further includes a reserved (reserved) subfield, where the reserved subfield is adjacent to the service flag subfield, and the reserved subfield may be for extending a length of the service flag subfield, to support service subfield extension in the option field. For example, a least significant bit of the reserved subfield is adjacent to a most significant bit of the service flag subfield. The service flag subfield corresponds to the m services, the option field includes the k service subfields in a one-to-one correspondence with the k services in the m services, the first k-1 service subfields in the k service subfields may have the same length, and the length of the k^{th} service subfield may be different from the lengths of the first k-1 service subfields. Compared with extending a service subfield after the k^{th} service subfield, extending a service subfield before the 1^{st} service subfield makes a smaller change to the option field, and extending a service subfield before the 1^{st} service subfield is more convenient. Therefore, in this embodiment of this application, the least significant bit of the reserved subfield is set to be adjacent to the most significant bit of the service flag subfield. This helps improve convenience of service subfield extension. The reserved subfield may be further for extension of another function. This is not limited in this embodiment of this application.

In a specific implementation, the option field further includes a type subfield and a length subfield. The type subfield indicates a type of the option field, and the length subfield indicates a length of the option field. The option field may be a type length value (type length value, TLV) field, and the k service subfields, the length flag subfield (that is, the fourth subfield), the service flag subfield, the basic subfield, and the reserved subfield all belong to a value (value) subfield of the option field.

In an example of this application, FIG. 14 is a schematic diagram of a structure of an option field according to an embodiment of this application. The option field includes a type subfield, a length subfield, a reserved subfield, a service flag subfield, and k service subfields (a service subfield 1 to a service subfield k). A length of the type subfield, a length of the length subfield, a length of the reserved subfield, and a length of the service flag subfield are all 8 bits. The k service subfields are arranged in a sequence from a part close to the service flag subfield to a part far away from the service flag subfield. Lengths of first k-1 service subfields in the k service subfields are all 32 bits, and a length of a k^{th} service subfield (that is, the last service subfield) is greater than the lengths of the first k-1 service subfields. For example, the length of the k^{th} service subfield is 64 bits.

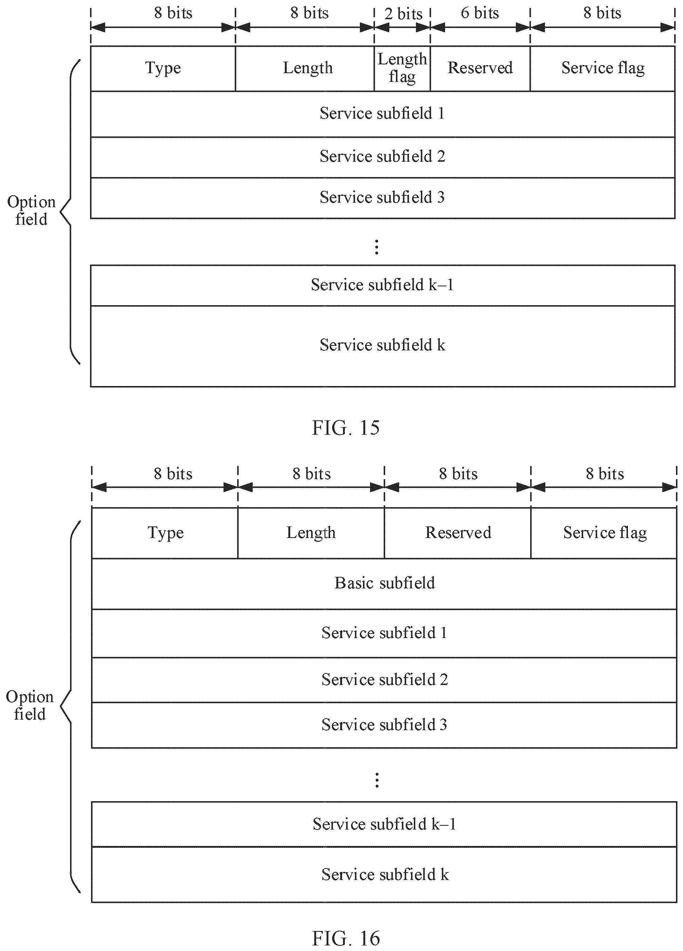

In another example of this application, FIG. 15 is a schematic diagram of a structure of another option field according to an embodiment of this application. Different from the option field shown in FIG. 14, the option field shown in FIG. 15 further includes a length flag subfield (that is, the foregoing fourth subfield). The length flag subfield indicates the lengths of the first k-1 service subfields in the k service subfields. In the option field shown in FIG. 15, a length of the length flag subfield is 2 bits, and a length of the reserved subfield is 6 bits.

In still another example of this application, FIG. 16 is a schematic diagram of a structure of still another option field according to an embodiment of this application. Different from the option field shown in FIG. 14, the option field shown in FIG. 16 further includes a basic subfield. The k service subfields are arranged after the basic subfield in an order from a part close to the basic subfield to a part far away from the basic subfield. The basic subfield corresponds to a basic service, and a length of the basic subfield is 32 bits.

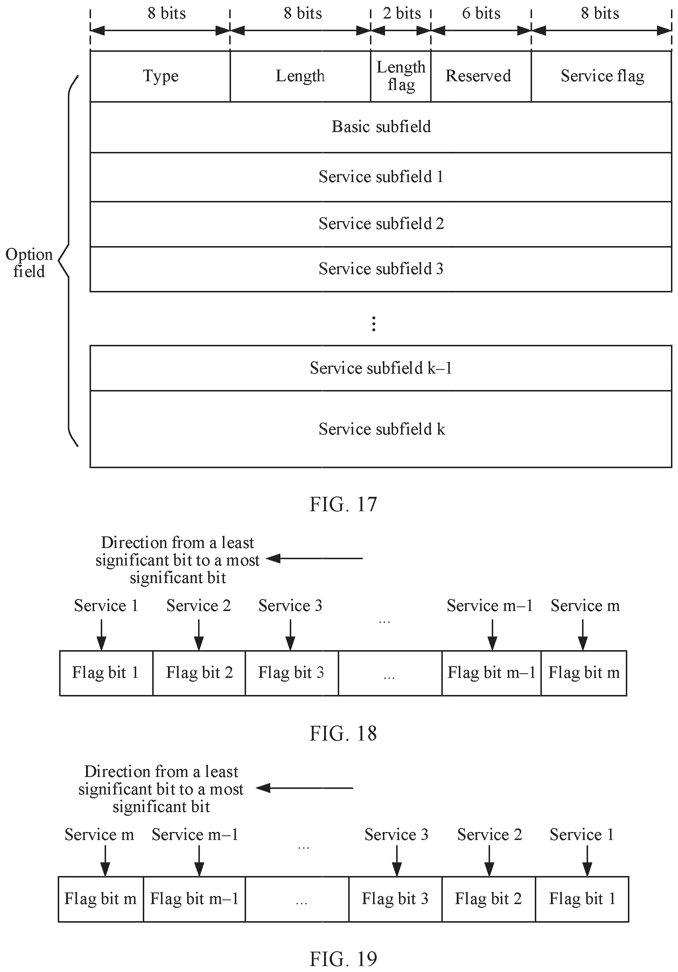

In yet another example of this application, FIG. 17 is a schematic diagram of a structure of yet another option field according to an embodiment of this application. Different from the option field shown in FIG. 14, the option field shown in FIG. 17 further includes a length flag subfield (that is, the foregoing fourth subfield) and a basic subfield. The k service subfields are arranged after the basic subfield in an order from a part close to the basic subfield to a part far away from the basic subfield. The length flag subfield indicates the lengths of the first k-1 service subfields in the k service subfields. A length of the length flag subfield is 2 bits, a length of the reserved subfield is 6 bits, and a length of the basic subfield is 32 bits.

In the option fields shown in FIG. 14 to FIG. 17, the service flag subfield corresponds to m services (for example, a service 1 to a service m), the service flag subfield indicates that the option field carries service information of k services in the m services, and the k service subfields are in a one-to-one correspondence with the k services. For example, the service subfield 1 corresponds to a service S1, the service subfield 2 corresponds to a service S2, the service subfield 3 corresponds to a service S3, ..., the service subfield k corresponds to a service Sk, and the service S1 to the service Sk are the k services in the service 1 to the service m. For example, FIG. 18 and FIG. 19 are schematic diagrams of two structures of the service flag subfield. The service flag subfield includes the m flag bits (for example, m=8), the m flag bits are in a one-to-one correspondence with the m services, and the arrangement order of the m flag bits corresponds to the arrangement order of the k service subfields. For example, the m flag bits include a flag bit 1 to a flag bit m, and the flag bit 1 to the flag bit m are in a one-to-one correspondence with the service 1 to the service m. As shown in FIG. 18, the flag bit 1 to the flag bit m are arranged in an order of a most significant bit to a least significant bit, and the arrangement order of the k service subfields corresponds to the order of the flag bit 1 to the flag bit m. As shown in FIG. 19, the flag bit 1 to the flag bit m are arranged in an order of a least significant bit to a most significant bit, and the arrangement order of the k service subfields corresponds to a reverse order of the flag bit 1 to the flag bit m.

For example, refer to FIG. 14 to FIG. 17. For the foregoing first specific implementation (the m services corresponding to the service flag subfield include the first service and the second service), the first service and the second service may be any two services that are sequentially arranged in the service S1 to the service S(k-1), and the third service may be the service Sk. For example, the first service is the service S1, the second service is the service S2, the first subfield corresponding to the first service is the service subfield 1, the second subfield corresponding to the second service is the service subfield 2, and the third subfield corresponding to the third service is the service subfield k. For another example, the first service is the service S2, the second service is the service S(k-1) the first subfield corresponding to the first service is the service subfield 2, the second subfield corresponding to the second service is the service subfield k-1, and the third subfield corresponding to the third service is the service subfield k. For the foregoing second specific implementation (the first service is a basic service, and the m services corresponding to the service flag subfield include the second service), the second service may be any one of the service S1 to the service Sk. For example, the second service is the service S1, the third service may be the service Sk, the first subfield corresponding to the first service is the basic subfield, the second subfield corresponding to the second service is the service subfield 1, and the third subfield corresponding to the third service is the service subfield k. For another example, the second service is the service S(k-1), the third service may be the service Sk, the first subfield corresponding to the first service is the basic subfield, the second subfield corresponding to the second service is the service subfield k-1, and the third subfield corresponding to the third service is the service subfield k.

This embodiment of this application is described by using an example in which the service flag subfield includes the m flag bits, and the m flag bits are arranged in order. This does not constitute a limitation on the service flag subfield. The m flag bits may alternatively be arranged in another manner, or the service flag subfield may alternatively correspond to the m services in another manner, and the service flag subfield may alternatively indicate, in another manner, that the option field carries the service information of the k services. For example, the service flag subfield includes m flag spaces that are in a one-to-one correspondence with the m services, a length of at least one of the m flag spaces is greater than 1 bit, the m flag spaces are sequentially arranged, and an arrangement order of the m flag spaces corresponds (which may be a sequential correspondence or a reverse correspondence) to the arrangement order of the k service subfields. For example, a length of each of the m flag spaces is 2 bits. Alternatively, lengths of a part of the m flag spaces each are a bits (for example, 1 bit), and lengths of the other part of the m flag spaces each are b bits (for example, 2 bits). Alternatively, lengths of the m flag spaces are different (for example, the lengths of the m flag spaces are in ascending order). This is not limited in this embodiment of this application.

In an example, a length of a part of the m flag spaces is a bits (for example, 1 bit), and a length of the other part of the m flag spaces is b bits (for example, 2 bits). The flag space whose length is a bits and the flag space whose length is b bits are arranged at a spacing, and the m flag spaces correspond (which may be a sequential correspondence or a reverse correspondence) to the k service subfields. For example, k=3. The k services corresponding to the k service subfields include a slice service, an APN service, and an IFIT service, and a service subfield corresponding to the slice service, a service subfield corresponding to the APN service, and a service subfield corresponding to the IFIT service are sequentially arranged. In a case, m=k. Both a length of a flag space corresponding to the slice service and a length of a flag space corresponding to the IFIT service are a bits, and a length of a flag space corresponding to the APN service is b bits. Alternatively, both a length of a flag space corresponding to the slice service and a length of a flag space corresponding to the IFIT service are b bits, and a length of a flag space corresponding to the APN service is a bits. In another case, m>k. A length of a flag space corresponding to the slice service, a length of a flag space corresponding to the APN service, and a length of a flag space corresponding to the IFIT service are all a bits. Alternatively, a length of a flag space corresponding to the slice service, a length of a flag space corresponding to the APN service, and a length of a flag space corresponding to the IFIT service are all b bits. Alternatively, a length of each of flag spaces corresponding to two services in the slice service, the APN service, and the IFIT service is a bits, and a length of a flag space corresponding to the other service is b bits. Alternatively, a length of each of flag spaces corresponding to two services in the slice service, the APN service, and the IFIT service is b bits, and a length of a flag space corresponding to the other service is a bits.

In an example, lengths of the m flag spaces are different (for example, lengths of the m flag spaces are in ascending order), the m flag spaces are arranged in descending order of the lengths or in ascending order of the lengths, and the m flag spaces correspond (which may be a sequential correspondence or a reverse correspondence) to the k service subfields. For example, the k services corresponding to the k service subfields include a slice service, an APN service, and an IFIT service, and a service subfield corresponding to the slice service, a service subfield corresponding to the APN service, and a service subfield corresponding to the IFIT service are sequentially arranged. A length of a flag space corresponding to the slice service in the m flag spaces is a bits, a length of a flag space corresponding to the APN service is b bits, and a length of a flag space corresponding to the IFIT service is c bits, where a, b, and c increase sequentially, or a, b, and c decrease sequentially.

As an example, the service flag subfield indicates, by using a value of the service flag subfield, service information of which services is carried in the option field. For example, if the value of the service flag subfield is a first value (which may be a binary value or a binary sequence), the service flag subfield indicates that the option field carries service information of the service 1, the service 2, and the service 3. Alternatively, if the value of the service flag subfield is a second value (which may be a binary value or a binary sequence), the service flag subfield indicates that the option field carries service information of the service 4, the service 5, and the service 6. Alternatively, if the value of the service flag subfield is a third value (which may be a binary value or a binary sequence), the service flag subfield indicates that the option field carries service information of the service 1, the service 3, and the service 4.

In this embodiment of this application, the first service may include any one of a slice service, an in-band flow measurement service, an APN service, and a DetNet service. The second service may include any one of a slice service, an in-band flow measurement service, an APN service, and a DetNet service. The third service may include any one of a slice service, an in-band flow measurement service, an APN service, and a DetNet service. In addition, the first service, the second service, and the third service are different from each other. For example, the first service is a slice service, the second service is an APN service, and the third service is an in-band flow measurement service. The in-band flow measurement service includes an IFIT service or an IOAM service, or may be another an in-band flow measurement service. This is not limited in this embodiment of this application.

In this embodiment of this application, service information of any service may include information related to the service. For example, service information of any service includes service information of the service that is carried in an option field when the option field is independently extended for the service currently, and may further include other information related to the service. This is not limited in this embodiment of this application. For example, service information of the slice service includes a slice identifier; service information of the in-band flow measurement service includes a flow identifier; service information of the APN service includes an APN attribute, where the APN attribute includes an APN ID and an APN parameter, the APN ID includes at least one of a user group identifier and an application group identifier, and the APN parameter includes at least one of a bandwidth requirement parameter, a delay requirement parameter, a packet loss rate requirement parameter, and a jitter requirement parameter; and service information of the DetNet service includes a path identifier.

S302. The network device A sends the packet A to the network device B.

In a specific implementation, the network device B is a next-hop device of the network device A. The network device A searches a routing table of the network device A based on a destination address of the packet A, to determine an egress port corresponding to the packet A in the network device A. The network device A sends the packet A to the network device B through the egress port corresponding to the packet A. For example, as shown in FIG. 11 and FIG. 12, the network device A is the network device 101, the network device B is the network device 102, and the network device 101 sends the packet A to the network device 102 through the egress port corresponding to the packet A. Alternatively, the network device A is the network device 102, the network device B is the network device 103, and the network device 102 sends the packet A to the network device 103 through the egress port corresponding to the packet A.

In another specific implementation, the network device B is not a next-hop device of the network device A, the network device B is connected to the network device A by using another network device, and the network device A sends the packet A to the network device B by using the another network device. For example, as shown in FIG. 11 and FIG. 12, the network device A is the network device 101, and the network device B is the network device 103. The network device 101 sends the packet A to the network device 103 by using the network device 102. To be specific, the network device 101 forwards the packet A to the network device 102, and the network device 102 forwards the packet A to the network device 103. Alternatively, the network device A is the network device 102, and the network device B is the network device 104. The network device 102 sends the packet A to the network device 104 by using the network device 103. To be specific, the network device 102 forwards the packet A to the network device 103, and the network device 103 forwards the packet A to the network device 104.

S303. The network device B receives the packet A.

Corresponding to sending the packet A to the network device B by the network device A, the network device B receives the packet A.

S304. The network device B processes the packet A based on the first service information carried in the option field in the packet A.

In this embodiment of this application, the network device B may be an intermediate node or a tail node on a forwarding path of the packet A. It can be learned from S301 that the option field may be located in the HBH, the 1^{st} DOH, or the 2^{nd} DOH of the packet A. If the option field is located in the HBH, each network device that receives the packet A may process the packet A based on the option field. If the option field is located in the 1^{st} DOH, each network device that receives the packet A and hits the destination address of the packet A may process the packet A based on the option field. If the option field is located in the 2^{nd} DOH, only the tail node needs to process the packet A based on the option field.

In a specific implementation, the network device B is an intermediate node. If the option field is located in the HBH of the packet A, the network device B processes the packet A based on the option field. If the option field is located in the 1^{st} DOH of the packet A, the network device B determines whether the network device B hits the destination address of the packet A. If the network device B hits the destination address of the packet A, the network device B processes the packet A based on the option field; or if the network device B does not hit the destination address of the packet A, the network device B does not process the packet A based on the option field. If the option field is located in the 2^{nd} DOH of the packet A, the network device B does not process the packet A based on the option field.

In another specific implementation, the network device B is a tail node. If the option field is located in the HBH of the packet A, the network device B processes the packet A based on the option field. If the option field is located in the 1^{st} DOH of the packet A, the network device B determines whether the network device B hits the destination address of the packet A. If the network device B hits the destination address of the packet A, the network device B processes the packet A based on the option field; or if the network device B does not hit the destination address of the packet A, the network device B does not process the packet A based on the option field. If the option field is located in the 2^{nd} DOH of the packet A, the network device B processes the packet A based on the option field. In a specific implementation, the network device B serving as the tail node may further remove the option field from the packet A. This is not limited in this embodiment of this application.

In this embodiment of this application, an example in which the network device B processes the packet A based on the option field is used for description. The option field may carry the service information of the k services, and the service information of the k services may be arranged in order. The network device B may process, based on the arrangement order of the service information of the k services, the packet A sequentially based on the service information of the k services. For example, the k services include the first service and the second service, and the first service information corresponding to the first service and the second service information corresponding to the second service are arranged in order. The network device B processes, based on the arrangement order of the first service information and the second service information that are included in the packet A, the packet A sequentially based on the first service information and the second service information. In this embodiment of this application, the network device B may support all of the k services, or may not support at least one of the k services. In a process in which the network device B processes the packet A based on the option field, if the network device B supports a service, the network device B processes the packet A based on service information of the service included in the packet A; or if the network device B does not support a service, the network device B skips service information of the service included in the packet A. For example, the option field includes the service flag field and the k service subfields that are in a one-to-one correspondence with the k services. For any service (for example, the service S1) in the k services, the network device B determines, based on the service flag field, a service subfield (for example, the service subfield 1) corresponding to the service S1. If the network device B supports the service S1, the network device obtains service information of the service S1 from the service subfield 1 included in the packet A, and processes the packet A based on the service information of the service S1. If the network device B does not support the service S1, the network device skips the service subfield 1 included in the packet A, to skip service information of the service S1.

This embodiment of this application is described by using an example in which the network device B supports the first service. The network device B processes the packet A based on the first service information (that is, service information of the first service) carried in the option field. In a specific implementation, the network device B first obtains the first service information from the first subfield in the option field, and then processes the packet A based on the first service information and local configuration information associated with the first service. The local configuration information associated with the first service may include program instruction associated with the first service in the network device B, and may further include other configuration information associated with the first service in the network device B. The program instructions include at least one processing action (action), and the at least one processing action may include, for example, a statistics collection action, a detection action, and a forwarding action. In this embodiment of this application, that the network device B processes the packet A based on the first service information and local configuration information associated with the first service may include: The network device B determines, from the network device B based on the first service information included in the packet A, the program instructions associated with the first service, and then executes the program instructions to process the packet A.

In a specific implementation, the first service is a slice service, and the local configuration information associated with the first service in the network device B may include resource configuration information associated with the slice service in the network device B, program instructions associated with the slice service in the network device B, and the like. The resource configuration information associated with the slice service in the network device B may include a slice identifier of the slice service, a slice interface that carries the slice service in the network device B, a correspondence between the slice identifier of the slice service and the slice interface that carries the slice service in the network device B, and the like. The program instructions associated with the slice service in the network device B may include the slice identifier of the slice service and a processing action associated with the slice service in the network device B. For example, the processing action associated with the slice service in the network device B includes a forwarding action, a slice interface corresponding to the forwarding action, and the like. For example, the first service is a slice service, and the first service information is a slice identifier. That the network device B processes the packet A based on the first service information included in the packet A and local configuration information associated with the first service includes: The network device B determines, from the network device B based on the slice identifier included in the packet A, the program instructions associated with the slice service, and then executes the processing action included in the program instructions to process the packet A. For example, the network device B may send the packet A to a next-hop device of the network device B through the slice interface associated with the slice service.

In another specific implementation, the first service is an in-band flow measurement service, and the local configuration information associated with the first service in the network device B includes program instructions associated with the in-band flow measurement service in the network device B. The program instructions associated with the in-band flow measurement service in the network device B may include a flow identifier of the in-band flow measurement service and processing actions associated with the in-band flow measurement service in the network device B. These processing actions are, for example, a statistics collection action and a detection action. The statistics collection action may specifically include content on which statistics are to be collected. For example, statistics about a receiving timestamp at which a packet of the in-band flow measurement service is received by the network device B, statistics about a sending timestamp at which the packet of the in-band flow measurement service is sent by the network device B, statistics about a packet sequence number of the packet of the in-band flow measurement service, statistics about a transmission delay of the packet of the in-band flow measurement service in the network device B, and the like are collected. The in-band flow measurement service may include an IFIT service or an IOAM service. In an example, the first service is an IFIT service, and the first service information is a flow identifier. That the network device B processes the packet A based on the first service information included in the packet A and local configuration information associated with the first service includes: The network device B determines, from the network device B based on the flow identifier included in the packet A, the program instructions associated with the IFIT service, and then executes the processing action included in the program instructions to process the packet A. For example, the network device B executes the processing action included in the program instructions to collect statistics about transmission quality information such as a receiving timestamp at which the packet A is received by the network device B, a sending timestamp at which the packet A is sent by the network device B, and a packet sequence of the packet A. The network device B may further report the transmission quality information and the flow identifier to a controller, so that the controller determines transmission quality of the IFIT service based on transmission quality information that is of the IFIT service and that is sent by a plurality of network devices. In another example, the first service is an IOAM service, and the first service information is a flow identifier. That the network device B processes the packet A based on the first service information included in the packet A and local configuration information associated with the first service includes: The network device B determines, from the network device B based on the flow identifier included in the packet A, the program instructions associated with the IOAM service, and then executes the processing action included in the program instructions to process the packet A. For example, the network device B performs the processing action included in the program instructions to perform detection processing such as service-level agreement (service-level agreement, SLA) detection and path verification based on the packet A. Specifically, the network device B adds a receiving timestamp of receiving the packet A by the network device B, a sending timestamp of sending the packet A by the network device B, a transmission delay of the packet A in the network device B, and metadata (metadata, MD) of the network device B to the packet A. The MD of the network device B may include an identifier of the network device B. The network device B may further perform, for example, SLA quality determining and path verification based on detection information (for example, an identifier of a network device) carried in the packet A.

In still another specific implementation, the first service is an APN service, and the local configuration information associated with the first service in the network device B may include resource configuration information associated with the APN service in the network device B, program instructions associated with the APN service in the network device B, and the like. The resource configuration information associated with the APN service in the network device B may include a forwarding interface allocated by the network device B to the APN service, a bandwidth allocated by the network device B to the APN service, and the like, to ensure requirements such as a bandwidth, a delay, jitter, and a packet loss rate of the APN service. The program instructions associated with the APN service in the network device B may include an APN attribute of the APN service and a processing action associated with the APN service in the network device B, for example, include a forwarding action and a forwarding interface corresponding to the forwarding action. For example, the first service is an APN service, the first service information includes an APN attribute, the APN attribute includes an APN ID, an APN parameter, and the like, the APN ID includes a user group identifier and an application group identifier, the APN parameter includes at least one of a bandwidth requirement parameter, a delay requirement parameter, a jitter requirement parameter, and a packet loss rate requirement parameter. That the network device B processes the packet A based on the first service information included in the packet A and local configuration information associated with the first service includes: The network device B determines, from the network device B based on the APN attribute included in the packet A, the program instructions associated with the APN service, and then executes the processing action included in the program instructions to process the packet A. For example, the network device B sends the packet A to a next-hop device of the network device B through a forwarding interface associated with the APN service.

In still another specific implementation, the first service is a DetNet service, and the local configuration information associated with the first service in the network device B includes resource configuration information associated with the DetNet service in the network device B, program instructions associated with the DetNet service in the network device B, and the like. The resource configuration information associated with the DetNet service in the network device B may include a path identifier of the DetNet service and a path resource that is in the network device B and that corresponds to a forwarding path indicated by the path identifier, for example, an interface corresponding to the forwarding path, an interface bandwidth corresponding to the forwarding path, and an interface rate corresponding to the forwarding path. The program instructions associated with the DetNet service in the network device B may include the path identifier of the DetNet service and a processing action associated with the DetNet service in the network device B, for example, including a forwarding action and a forwarding interface corresponding to the forwarding action. For example, the first service is a DetNet service, and the first service information is a path identifier. That the network device B processes the packet A based on the first service information included in the packet A and local configuration information associated with the first service includes: The network device B determines, from the network device B based on the path identifier included in the packet A, the program instructions associated with the DetNet service, and then executes the processing action included in the program instructions to process the packet A. For example, the network device B determines, in the network device B based on the path identifier, a path resource (for example, an interface that is in the network device B and that corresponds to a forwarding path) of the forwarding path indicated by the path identifier, and the network device B sends the packet A to a next-hop device of the network device B by using the path resource.

The foregoing descriptions about the first service information, the local configuration information associated with the first service, and processing, by the network device B, the packet A based on the first service information and the local configuration information associated with the first service are merely examples, and cannot be used to limit the technical solutions of this application. Based on different first service information and different local configuration information associated with the first service, processing performed by the network device B based on the first service information is different. Moreover, in addition to processing the packet A based on the service information carried in the option field in the packet A, the network device B may further process the packet A based on other information carried in the packet A. The information may be carried in the option field, or may not be carried in the option field. This is not limited in this embodiment of this application. In addition, in another embodiment, when the first service information includes the path identifier, the first service may be a path-oriented service, for example, a path-oriented OAM service, a path-oriented visualization service, a path-oriented traffic statistics service, or a path-oriented performance measurement service. When the first service information includes the flow identifier, the first service may be a flow-oriented service, for example, a flow-oriented OAM service, a flow-oriented visualization service, a flow-oriented traffic statistics service, or a flow-oriented performance measurement service. When the first service information includes the slice identifier, the first service may be a network slice-oriented service, for example, a network slice-oriented OAM service, a network slice-oriented visualization service, a network slice-oriented traffic statistics service, or a network slice-oriented performance measurement service. When the first service information includes the user group identifier, the first service may be a user group-oriented service, for example, a user group-oriented OAM service, a user group-oriented visual service, a user group-oriented traffic statistics service, or a user group-oriented performance measurement service. When the first service information includes the application group identifier, the first service may be an application group-oriented service, for example, an application group-oriented OAM service, an application group-oriented visualization service, an application group-oriented traffic statistics service, or an application group-oriented performance measurement service.

In an optional specific implementation, local configuration information associated with the first service in different network devices may be the same or different. To be specific, for the same first service information carried in the packet A, processing behaviors associated with the first service that are executed on different network devices are different. For example, in some network devices, program instructions associated with the first service include the first service information and a statistics collection action associated with the first service; in some other network devices, program instructions associated with the first service include the first service information and a detection action associated with the first service; and in still some other network devices, program instructions associated with the first service include the first service information, a forwarding action associated with the first service, and the like. This is not limited in this embodiment of this application. For example, the first service is an IFIT service, and the first service information included in the packet is the flow identifier. Refer to FIG. 11 or FIG. 12. Program instructions associated with the IFIT service in the network device 101 may include: the flow identifier of the IFIT service and collecting statistics about a sending timestamp at which a packet of the IFIT service is sent by the network device 101. Program instructions associated with the IFIT service in the network device 102 may include: the flow identifier of the IFIT service, collecting statistics about a receiving timestamp at which a packet of the IFIT service is received by the network device 102, and collecting statistics about a sending timestamp at which the packet of the IFIT service is sent by the network device 102. Program instructions associated with the IFIT service in the network device 103 may include: the flow identifier of the IFIT service and collecting statistics about a packet sequence number of a packet of the IFIT service. Program instructions associated with the IFIT service in the network device 104 may include: the flow identifier of the IFIT service and collecting statistics about a transmission delay of a packet of the IFIT service in the network device 104. Program instructions associated with the IFIT service in the network device 105 may include: the flow identifier of the IFIT service and reporting transmission quality information of the IFIT service to the controller. The transmission quality information includes, for example, a timestamp for sending a packet of the IFIT service by a specific network device or several specific network devices on a forwarding path of the packet, a timestamp for receiving the packet by a specific network device or several specific network devices, and a transmission delay of the packet in a specific network device or several specific network devices. The first service information (for example, the flow identifier of the IFIT service) included in the program instructions associated with the first service is used by the network device to determine, based on the first service information included in the packet, the local configuration information associated with the first service.

In addition, in this embodiment of this application, an example in which the packet A includes the option field is used for description. If the packet A does not include the option field, the network device B does not perform processing based on the option field on the packet A, and the network device B may forward the packet A in a conventional forwarding manner. For example, if the packet A is an IPv6 packet and does not include the option field, the network device B forwards the packet A in a conventional IPv6 forwarding manner. This is not limited in this embodiment of this application.

In conclusion, according to the service processing method provided in this embodiment of this application, a same option field in a same packet can carry service information of at least two different services. Therefore, overheads caused by some fixed content and some optional subfields in the option field can be reduced, thereby helping reduce packet overheads, simplifying packet processing complexity of the network device, and improving forwarding performance of the network device. In addition, because the lengths of the first k-1 service subfields in the k service subfields in the option field are equal, when the network device does not support a service, the network device may directly skip, based on a length of a service subfield corresponding to the service, the service subfield corresponding to the service. Packet parsing logic of the network device is clear, and processing performance of a chip is good.

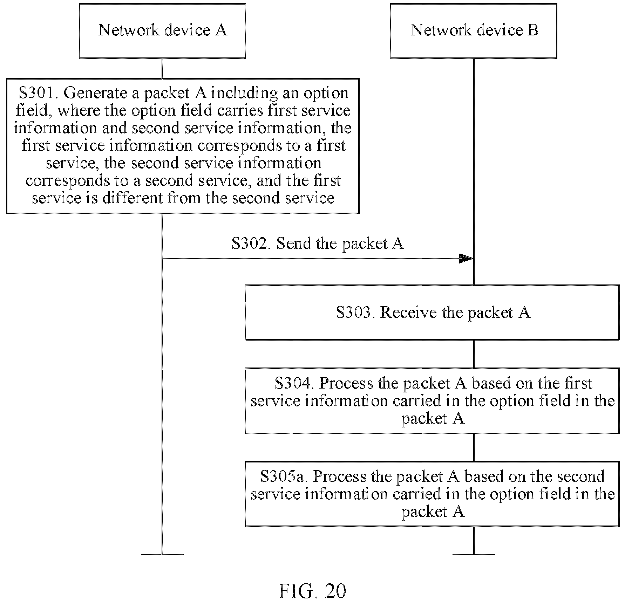

In a specific implementation, the network device B supports the first service and the second service. In addition to processing the packet A based on the first service information carried in the option field in the packet A, the network device B may further process the packet A based on the second service information carried in the option field in the packet A. As shown in FIG. 20, the service processing method in this embodiment of this application further includes the following step S305a.

S305a. The network device B processes the packet A based on the second service information carried in the option field in the packet A.

For an implementation process in which the network device B processes the packet A based on the second service information, refer to S304. Details are not described herein again.

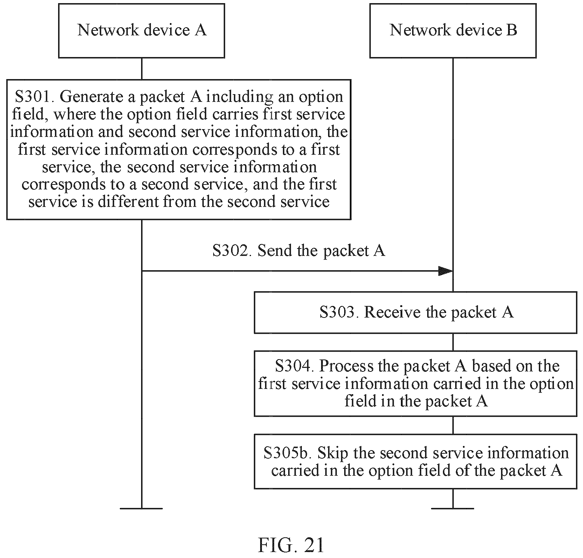

In another specific implementation, the network device B supports the first service but does not support the second service. In addition to processing the packet A based on the second service information carried in the option field in the packet A, the network device B may further skip the second service information carried in the option field in the packet A. As shown in FIG. 21, the service processing method in this embodiment of this application further includes the following step S305b.

S305b. The network device B skips the second service information carried in the option field in the packet A.

That is, the network device B does not process the packet A based on the second service information.

The second service information corresponds to the second service, and the second service information is carried in the second subfield (that is, a service subfield corresponding to the second service). The network device B may determine the second subfield based on the service flag field in the option field, and the network device B skips the second subfield, to skip the second service information.

In a specific implementation, after generating the packet A, the network device A may further process the packet A based on the option field in the packet A. For example, the network device A supports the first service and the second service, and the network device A processes the packet A based on the first service information and the second service information that are carried in the option field. For another example, the network device A supports the first service but does not support the second service, the network device A processes the packet A based on the first service information carried in the option field, and the network device A skips the second service information. For another example, the network device A supports the second service but does not support the first service, the network device A processes the packet A based on the second service information carried in the option field, and the network device A skips the first service information. For a process in which the network device A processes the packet A based on the option field, refer to a process in which the network device B processes the packet A based on the option field. Details are not described herein again in this embodiment of this application.

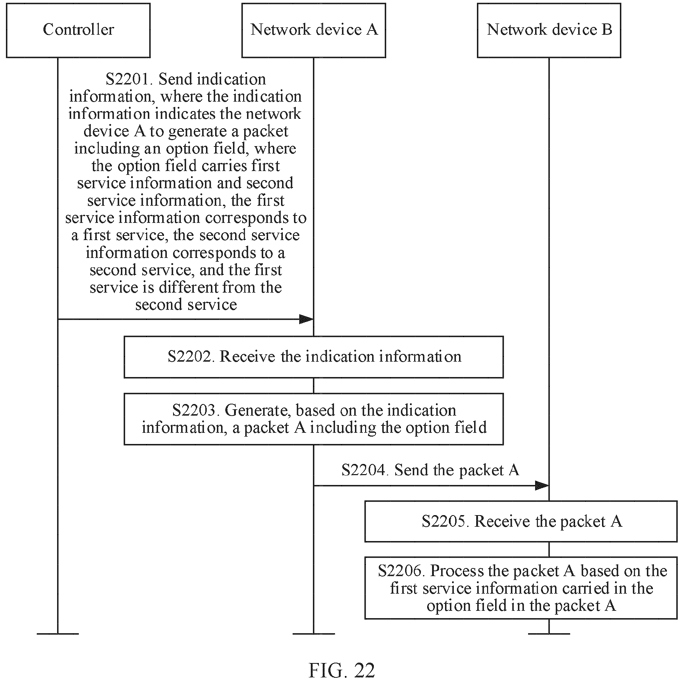

In a specific implementation, the network device A generates, based on an indication of the controller, the packet A including the option field. The controller may be the controller 100 shown in FIG. 11 or FIG. 12. For example, FIG. 22 is a flowchart of a service processing method according to an embodiment of this application. The method includes the following steps S2201 to S2206.

S2201. The controller sends indication information to the network device A, where the indication information indicates the network device A to generate a packet including an option field. The option field carries first service information and second service information, the first service information corresponds to a first service, the second service information corresponds to a second service, and the first service is different from the second service.

Optionally, the controller first generates the indication information, and then sends the indication information to the network device A. For example, the controller sends the indication information to the network device A by using a border gateway protocol (border gateway protocol, BGP) packet, a network configuration Protocol (network configuration protocol, NETCONF) packet, or another proprietary protocol packet.

In a specific implementation, the indication information includes configuration information of the option field, to indicate the network device A to generate the packet including the option field. Alternatively, the indication information includes the option field, to indicate the network device A to generate the packet including the option field. Alternatively, the indication information is an identifier of the option field, a name of the option field, or the like. The network device A includes configuration information of the option field, and the indication information indicates the network device A to generate, based on the configuration information of the option field in the network device A, the packet including the option field. Alternatively, the indication information is an identifier of the option field, a name of the option field, or the like. The network device A includes the option field, and the indication information indicates the network device A to generate, based on the option field in the network device A, the packet including the option field. The configuration information of the option field may include information carried in the option field and structure information of the option field. For example, the information carried in the option field includes the first service information, the second service information, and the like. The structure information of the option field includes a location of the first service information in the option field (for example, a location of a first subfield in the option field) and a location of the second service information in the option field (for example, a location of the second subfield in the option field). This is not limited in this embodiment of this application.

S2202. The network device A receives the indication information sent by the controller.

For example, the network device A receives a BGP packet, a NETCONF packet, or another proprietary protocol packet that is sent by the controller and that carries the indication information, and obtains the indication information from the received packet.

S2203. The network device A generates, based on the indication information, a packet A including the option field.

In a specific implementation, the indication information includes the configuration information of the option field. The network device A generates the option field based on the configuration information of the option field, and then generates the packet A including the option field.

In another specific implementation, the indication information includes the option field. The network device A determines the option field from the indication information, to generate the packet A including the option field.

In still another specific implementation, the indication information is the identifier of the option field, the name of the option field, or the like. The network device A determines the configuration information of the option field in the network device A based on the indication information, generates the option field based on the configuration information of the option field, and then generates the packet A including the option field.

In yet another specific implementation, the indication information is the identifier of the option field, the name of the option field, or the like. The network device A determines the option field in the network device A based on the indication information, and then generates the packet A including the option field.

S2204. The network device A sends the packet A to the network device B.

S2205. The network device B receives the packet A.

S2206. The network device B processes the packet A based on the first service information carried in the option field in the packet A.

For an implementation process of S2203 to S2206, refer to the implementation process of S301 to S304. Details are not described herein again.

The embodiment shown in FIG. 20 is described by using an example in which the network device A generates, based on the indication of the controller, the packet A including the option field. In another implementation, the option field may be statically configured in the network device A, so that the network device A can generate the packet including the option field. This is not limited in this embodiment of this application.

In this embodiment of this application, each network device on the forwarding path of the packet A may process the packet A, and at least one network device on the forwarding path of the packet A may process the packet A based on the option field in the packet A. For example, the forwarding path of the packet A is the forwarding path P in FIG. 11 or FIG. 12 (the forwarding path P is: network device 101 -> network device 102 -> network device 103 -> network device 104 -> network device 105 -> network device 106). All the network devices 101 to 106 can process the packet A, and at least one of the network devices 101 to 106 processes the packet A based on the option field in the packet A. When processing the packet A based on the option field, the network device determines, by using a service flag field in the option field, service information of which services are carried in the option field. For example, a flag bit i in the service flag field corresponds to a service i. The network device determines, depending on whether the flag bit i is set (that is, whether a value of the flag bit i is 1), whether the option field carries service information of the service i. The following uses an example in which the network device 102 processes the packet A to describe a process in which a network device on the forwarding path of the packet A processes the packet A.

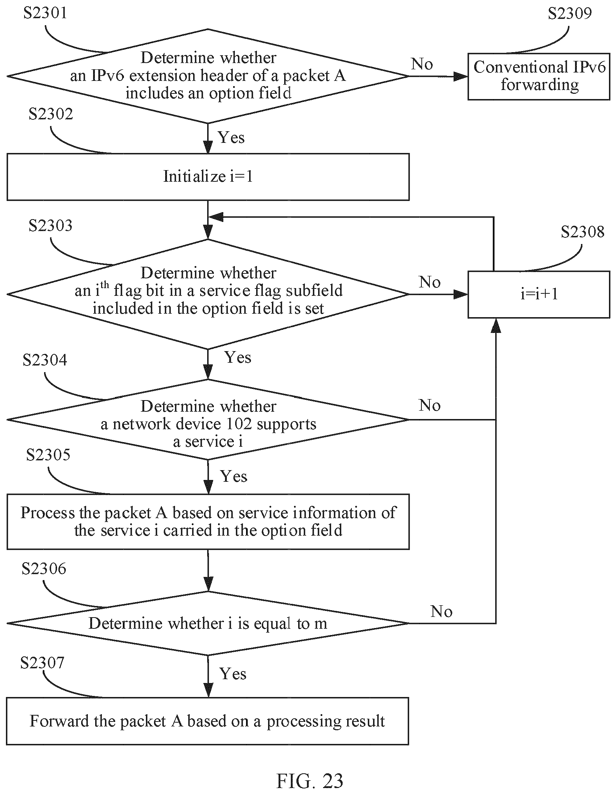

FIG. 23 is a flowchart of processing the packet A by the network device 102 according to an embodiment of this application. The procedure includes the following steps S2301 to S2309.

S2301. The network device 102 determines whether an IPv6 extension header of the packet A includes the option field. If the IPv6 extension header includes the option field, S2302 to S2308 are performed; or if the IPv6 extension header does not include the option field, S2309 is performed.

After receiving the packet A, the network device 102 starts to process the packet A. The network device 102 first determines whether the IPv6 extension header of the packet A includes the option field.

The IPv6 extension header includes, for example, an HBH or a DOH. The option field includes a service flag subfield, the service flag subfield includes m flag bits, the m flag bits are in a one-to-one correspondence with m services, and a value of each flag bit indicates whether the option field carries service information of a service corresponding to the flag bit.

In this embodiment of this application, a function of processing the option field may be enabled in advance on the network device 102. In this way, after receiving the packet A, the network device 102 may perform step S2301.

S2302. Initialize i=1. A maximum value of i is m.

S2303. The network device 102 determines whether an i^{th} flag bit in the service flag subfield included in the option field is set. If the i^{th} flag bit is set, S2304 to S2307 are performed; or if the i^{th} flag bit is not set, S2308 is performed.

The network device 102 may determine whether a value of the i^{th} flag bit is 1. If the value of the i^{th} flag bit is 1, the network device 102 determines the i^{th} flag bit. If the value of the i^{th} flag bit is 0, the network device 102 determines that the i^{th} flag bit is not set.

In the embodiment of this application, if a specific flag bit in the service flag subfield is set, it indicates that the option field carries service information of a service corresponding to the flag bit; if a specific flag bit in the service flag subfield is not set, it indicates that the option field does not carry service information of a service corresponding to the flag bit. In S2303, if the network device 102 determines that the i^{th} flag bit is set, the network device 102 determines that the option field carries service information of a service (for example, the service i) corresponding to the i^{th} flag bit, and the network device 102 performs S2304 to S2307. If the network device 102 determines that the i^{th} flag bit is not set, the network device 102 determines that the option field does not carry service information of a service corresponding to the i^{th} flag bit, and the network device 102 performs S2308.

S2304. The network device 102 determines whether the network device 102 supports the service i. If the service i is supported, S2305 to S2307 are performed; or if the service i is not supported, S2308 is performed.

The service i is the service corresponding to the i^{th} flag bit. If the network device 102 does not support the service i, the network device 102 skips the service information of the service i, and the network device 102 performs S2308.

S2305. The network device 102 processes the packet A based on the service information of the service i carried in the option field.

The option field includes a service subfield corresponding to the service i. The network device 102 obtains the service information of the service i from the service subfield corresponding to the service i, and processes the packet A based on the service information of the service i. For a process in which the network device 102 processes the packet A based on the service information of the service i, refer to S304. Details are not described herein again.

S2306. The network device 102 determines whether i is equal to m. If i is equal to m, S2307 is performed; or if i is not equal to m, S2308 is performed.

The network device 102 may compare i and m to determine whether i is equal to m. If i is equal to m, it indicates that the i^{th} flag bit is the last flag bit in the service flag subfield. After processing in S2305, the network device 102 has processed the packet A based on the service information of the service corresponding to the last flag bit, and the network device 102 ends a process of processing the packet A based on the option field, and performs S2307. If i is less than m, it indicates that the i^{th} flag bit is not the last flag bit in the service flag subfield. The option field may further carry unprocessed service information. Therefore, the network device 102 performs S2308.

S2307. Forward the packet A based on a processing result.

For example, the option field carries a slice identifier. The network device 102 determines a slice interface in the network device 102 based on the slice identifier, and forwards the packet A through the slice interface.

For another example, the option field carries a path identifier. The network device 102 determines, in the network device 102 based on the path identifier, a path resource (for example, an interface) of a forwarding path indicated by the path identifier, and forwards the packet A by using the path resource.

S2308. Set i=i+1.

If the network device 102 determines that the i^{th} flag bit is not set in S2303, the network device 102 determines that the network device 102 does not support the service i in S2304, or the network device 102 determines that i is not equal to m in S2306, the network device 102 performs S2308, and starts to perform S2303 to S2307 based on i+1.

S2309. The network device 102 forwards the packet A in a conventional IPv6 forwarding manner.

To facilitate understanding of the technical solutions in this application, the following describes the service processing method in this application by using a specific example.

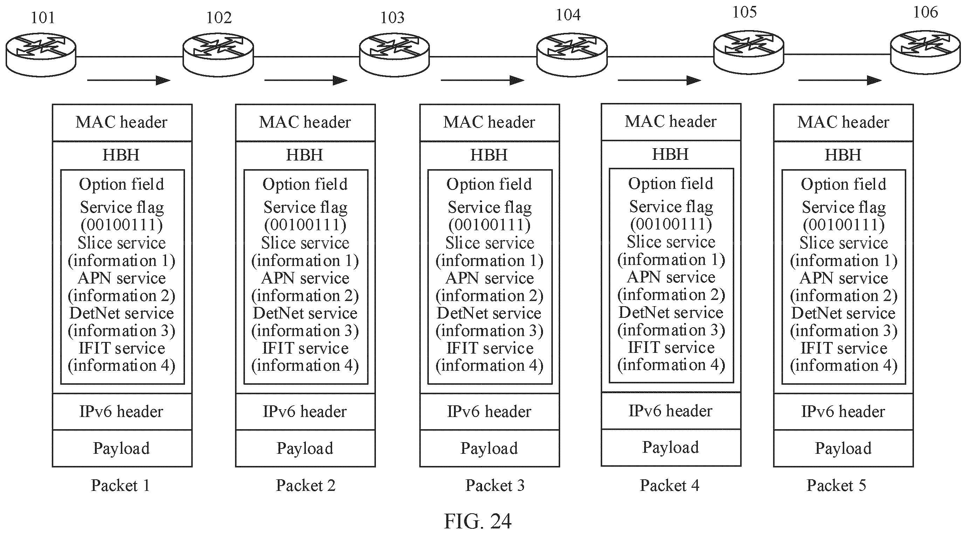

FIG. 24 is a schematic diagram of a service processing method according to an embodiment of this application. In FIG. 24, an example in which a packet is transmitted on a forwarding path P (the forwarding path P is: network device 101 -> network device 102 -> network device 103 -> network device 104 -> network device 105 -> network device 106) and a network device on the forwarding path P processes the packet is used for description. The packet includes a payload (payload), an IPv6 header, an HBH, and a media Access Control (media access control, MAC) header (and may further include other content, which is not described herein). The HBH includes an option field.

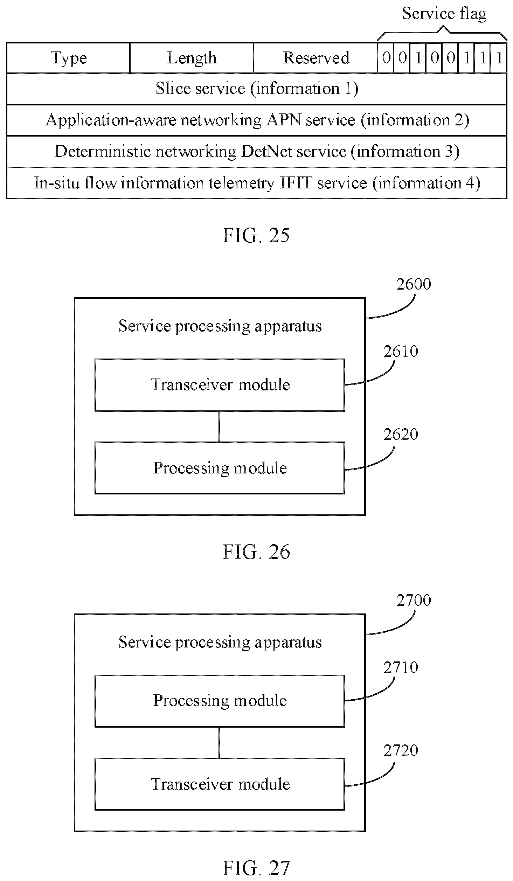

FIG. 25 is a schematic diagram of the option field in the packet shown in FIG. 24. As shown in FIG. 25, the option field includes a type subfield, a length subfield, a reserved subfield, a service flag subfield, and four service subfields. A value of the service flag subfield is 00100111, and the service flag subfield includes eight flag bits. In a specific implementation, in the eight flag bits arranged from a most significant bit to a least significant bit, a service corresponding to the 3^{rd} flag bit is a slice service, a service corresponding to the 6^{th} flag bit is an APN service, a service corresponding to the 7^{th} flag bit is a DetNet service, and a service corresponding to the 8^{th} flag bit is an IFIT service. In another specific implementation, in the eight flag bits arranged from a least significant bit to a most significant bit, a service corresponding to the 1^{st} flag bit is a slice service, a service corresponding to the 2^{nd} flag bit is an APN service, a service corresponding to the 3^{rd} flag bit is a DetNet service, and a service corresponding to the 6^{th} flag bit is an IFIT service. In the four service subfields arranged in a direction from a part close to the service flag subfield to a part far away from the service flag subfield (for example, in a direction from the 1^{st} 32 bits close to the option field to the 1^{st} 32 bits far away from the option field), the 1^{st} service subfield corresponds to the slice service, the 2^{nd} service subfield corresponds to the APN service, the 3^{rd} service subfield corresponds to the DetNet service, and the 4^{th} service subfield corresponds to the IFIT service. Service information (for example, information 1) of the slice service is located in the 1^{st} service subfield, service information (for example, information 2) of the APN service is located in the 2^{nd} service subfield, service information (for example, information 3) of the DetNet service is located in the 3^{rd} service subfield, and service information (for example, information 4) of the IFIT service is located in the 4^{th} service subfield.

Refer to FIG. 24. The network device 101 serving as a head node first generates the packet including the option field shown in FIG. 25, and then processes the packet based on the option field. Specifically, the network device 101 determines, based on a value of the service flag subfield, that the option field carries the service information (the information 1) of the slice service, the service information (the information 2) of the APN service, the service information (the information 3) of the DetNet service, and the service information (the information 4) of the IFIT service, and determines that the service information of the slice service is located in the 1^{st} service subfield, and the service information of the APN service is located in the 2^{nd} service subfield, the service information of the DetNet service is located in the 3^{rd} service subfield, and the service information of the IFIT service is located in the 4^{th} service subfield. The network device 101 traverses the four service subfields based on an arrangement order of the four service subfields, and processes the packet sequentially based on the service information carried in the four service subfields. First, the network device 101 traverses the 1^{st} service subfield. If the network device 101 supports the slice service, the network device 101 processes the packet based on the information 1 carried in the 1^{st} service subfield. If the network device 101 does not support the slice service, the network device 101 skips the 1^{st} service subfield. Then, the network device 101 traverses the 2^{nd} service subfield. If the network device 101 supports the APN service, the network device 101 processes the packet based on the information 2 carried in the 2^{nd} service subfield. If the network device 101 does not support the APN service, the network device 101 skips the 2^{nd} service subfield. Subsequently, the network device 101 traverses the 3^{rd} service subfield. If the network device 101 supports the DetNet service, the network device 101 processes the packet based on the information 3 carried in the 3^{rd} service subfield. If the network device 101 does not support the DetNet service, the network device 101 skips the 3^{rd} service subfield. Finally, the network device 101 traverses the 4^{th} service subfield. If the network device 101 supports the IFIT service, the network device 101 processes the packet based on the information 4 carried in the 4^{th} service subfield. If the network device 101 does not support the IFIT service, the network device 101 skips the 4^{th} service subfield. For example, the network device 101 skips the option field.

After processing the packet, the network device 101 obtains a packet 1, where the packet 1 includes an HBH, and the HBH includes the option field shown in FIG. 25. The network device 101 may send the packet 1 to the network device 102. Because the option field is located in the HBH, after the network device 102 receives the packet 1, the network device 102 processes the packet 1 based on the option field.

After processing the packet 1, the network device 102 obtains a packet 2, where the packet 2 includes an HBH, and the HBH includes the option field shown in FIG. 25. The network device 102 may send the packet 2 to the network device 103. Because the option field is located in the HBH, after the network device 103 receives the packet 2, the network device 103 processes the packet 2 based on the option field.

After processing the packet 2, the network device 103 obtains a packet 3, where the packet 3 includes an HBH, and the HBH includes the option field shown in FIG. 25. The network device 103 may send the packet 3 to the network device 104. Because the option field is located in the HBH, after the network device 104 receives the packet 3, the network device 104 processes the packet 3 based on the option field.

After processing the packet 3, the network device 104 obtains a packet 4, where the packet 4 includes an HBH, and the HBH includes the option field shown in FIG. 25. The network device 104 may send the packet 4 to the network device 105. Because the option field is located in the HBH, after the network device 105 receives the packet 4, the network device 105 processes the packet 4 based on the option field.

After processing the packet 4, the network device 105 obtains a packet 5, where the packet 5 includes an HBH, and the HBH includes the option field shown in FIG. 25. The network device 105 may send the packet 5 to the network device 106. Because the option field is located in the HBH, after the network device 106 receives the packet 5, the network device 106 processes the packet 5 based on the option field.

A process in which the network device 102 to the network device 106 process a corresponding packet based on an option field is similar to a process in which the network device 101 processes the packet based on the option field. Details are not described herein again. The network device 106 serving as a tail node may further remove an option field from the packet 5. This is not limited in this embodiment of this application.

The foregoing describes the method embodiments of this application. The following describes apparatus embodiments of this application. The apparatuses in this application may be configured to perform the methods in this application. For details not disclosed in the apparatus embodiments of this application, refer to the method embodiments.

FIG. 26 is a schematic diagram of a structure of a service processing apparatus 2600 according to an embodiment of this application. The service processing apparatus 2600 is applied to a network device. For example, the service processing apparatus 2600 is a network device or a function component in the network device. For example, the network device is the network device B in the foregoing method embodiments. As shown in FIG. 26, the service processing apparatus 2600 includes a transceiver module 2610 and a processing module 2620.

The transceiver module 2610 is configured to receive a packet including an option field, where the option field carries first service information and second service information, the first service information corresponds to a first service, the second service information corresponds to a second service, and the first service is different from the second service. For function implementation of the transceiver module 2610, refer to related descriptions in S303 or S2205.

The processing module 2620 is configured to process the packet based on the first service information. For function implementation of the processing module 2620, refer to related descriptions in S304 or S2206.

In a specific implementation, the option field includes a first subfield and a second subfield, the first subfield carries the first service information, and the second subfield carries the second service information.

In a specific implementation, a length of the first subfield is the same as a length of the second subfield.

In a specific implementation, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

In a specific implementation, the length of the third subfield is greater than the length of the first subfield.

In a specific implementation, both the length of the first subfield and the length of the second subfield are 2n bits, where n is an integer greater than or equal to 3.

In a specific implementation, the option field further includes a fourth subfield, and the fourth subfield indicates the length of the first subfield and the length of the second subfield.

In a specific implementation, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

In a specific implementation, the service flag subfield includes m flag bits, and the m flag bits are in a one-to-one correspondence with the m services; and a first flag bit in the m flag bits corresponds to the first service, a second flag bit corresponds to the second service, the first flag bit indicates that the option field carries the first service information, and the second flag bit indicates that the option field carries the second service information.

In a specific implementation, the first flag bit and the second flag bit are arranged in order, the first service information and the second service information are arranged in order, and an arrangement order of the first service information and the second service information corresponds to an arrangement order of the first flag bit and the second flag bit.

In a specific implementation, the first service information is basic service information, the option field includes a service flag subfield, the service flag subfield corresponds to m services, the m services are different from each other, the m services include the second service, the service flag subfield indicates that the option field carries the second service information, and m is a positive integer.

In a specific implementation, the first service is different from all of the m services.

In a specific implementation, the service flag subfield indicates that the option field carries service information of k services in the m services, and the service information of the k services is all located after the basic service information.

In a specific implementation, a subfield that is in the option field and that carries the basic service information is a basic subfield, the option field includes k service subfields that are in a one-to-one correspondence with the k services, and the k service subfields are located after the basic subfield.

In a specific implementation, a length of the basic subfield is a fixed value.

In a specific implementation, m≥4.

In a specific implementation, the option field further includes a reserved subfield, and the reserved subfield is adjacent to the service flag subfield.

In a specific implementation, a least significant bit of the reserved subfield is adjacent to a most significant bit of the service flag subfield.

In a specific implementation, the option field further includes a type subfield and a length subfield. The type subfield indicates a type of the option field, and the length subfield indicates a length of the option field.

In a specific implementation, the packet is an IPv6 packet, the packet includes an IPv6 extension header, and the IPv6 extension header includes the option field.

In a specific implementation, the IPv6 extension header includes either of an HBH and a DOH.

In a specific implementation, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service, or an IOAM service.

In a specific implementation, the first service includes a slice service, and the first service information includes a slice identifier.

In a specific implementation, the first service includes an in-band flow measurement service, and the first service information includes a flow identifier.

In a specific implementation, the first service includes an APN service, and the first service information includes at least one of a user group identifier and an application group identifier.

In a specific implementation, the first service includes a DetNet service, and the first service information includes a path identifier.

In a specific implementation, the network device supports the first service and the second service, and the processing module 2620 is further configured to process the packet based on the second service information. For function implementation of the processing module 2620, further refer to related descriptions in S305a.

In a specific implementation, the network device supports the first service but does not support the second service, and the processing module 2620 is further configured to skip the second service information. For function implementation of the processing module 2620, further refer to related descriptions in S305b.

In a specific implementation, the processing module 2620 is specifically configured to process the packet based on the first service information and local configuration information associated with the first service. For function implementation of the processing module 2620, further refer to related descriptions in S304.

In a specific implementation, the first service information and the second service information are arranged in order, and the processing module 2620 is specifically configured to process the packet based on the arrangement order of the first service information and the second service information.

In conclusion, according to the service processing apparatus provided in this embodiment of this application, a same option field in a same packet can carry service information of at least two different services. Therefore, overheads caused by some fixed content and some optional subfields in the option field can be reduced, thereby helping reduce packet overheads, simplifying packet processing complexity of the network device, and improving forwarding performance of the network device.

FIG. 27 is a schematic diagram of a structure of another service processing apparatus 2700 according to an embodiment of this application. The service processing apparatus 2700 is applied to a network device. For example, the service processing apparatus 2700 is a network device or a function component in the network device. For example, the network device is the network device A in the foregoing method embodiments. As shown in FIG. 27, the service processing apparatus 2700 includes a processing module 2710 and a transceiver module 2720.

The processing module 2710 is configured to generate a packet including an option field, where the option field carries first service information and second service information, the first service information corresponds to a first service, the second service information corresponds to a second service, and the first service is different from the second service. For function implementation of the processing module 2710, refer to related descriptions in S301 or S2203.

The transceiver module 2720 is configured to send the packet. For function implementation of the transceiver module 2720, refer to related descriptions in S302 or S2204.

In a specific implementation, the option field includes a first subfield and a second subfield, the first subfield carries the first service information, and the second subfield carries the second service information.

In a specific implementation, a length of the first subfield is the same as a length of the second subfield.

In a specific implementation, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

In a specific implementation, the length of the third subfield is greater than the length of the first subfield.

In a specific implementation, both the length of the first subfield and the length of the second subfield are 2n bits, where n is an integer greater than or equal to 3.

In a specific implementation, the option field further includes a fourth subfield, and the fourth subfield indicates the length of the first subfield and the length of the second subfield.

In a specific implementation, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

In a specific implementation, the service flag subfield includes m flag bits, and the m flag bits are in a one-to-one correspondence with the m services; and a first flag bit in the m flag bits corresponds to the first service, a second flag bit corresponds to the second service, the first flag bit indicates that the option field carries the first service information, and the second flag bit indicates that the option field carries the second service information.

In a specific implementation, the first flag bit and the second flag bit are arranged in order, the first service information and the second service information are arranged in order, and an arrangement order of the first service information and the second service information corresponds to an arrangement order of the first flag bit and the second flag bit.

In a specific implementation, the first service information is basic service information, the option field includes a service flag subfield, the service flag subfield corresponds to m services, the m services are different from each other, the m services include the second service, the service flag subfield indicates that the option field carries the second service information, and m is a positive integer.

In a specific implementation, the first service is different from all of the m services.

In a specific implementation, the service flag subfield indicates that the option field carries service information of k services in the m services, and the service information of the k services is all located after the basic service information.

In a specific implementation, a subfield that is in the option field and that carries the basic service information is a basic subfield, the option field includes k service subfields that are in a one-to-one correspondence with the k services, and the k service subfields are located after the basic subfield.

In a specific implementation, a length of the basic subfield is a fixed value.

In a specific implementation, m≥4.

In a specific implementation, the option field further includes a reserved subfield, and the reserved subfield is adjacent to the service flag subfield.

In a specific implementation, a least significant bit of the reserved subfield is adjacent to a most significant bit of the service flag subfield.

In a specific implementation, the option field includes a type subfield and a length subfield. The type subfield indicates a type of the option field, and the length subfield indicates a length of the option field.

In a specific implementation, the packet is an IPv6 packet, the packet includes an IPv6 extension header, and the IPv6 extension header includes the option field.

In a specific implementation, the IPv6 extension header includes either of an HBH and a DOH.

In a specific implementation, the first service includes any one of a slice service, an in-band flow measurement service, an APN service, and a DetNet service; or the second service includes any one of a slice service, an in-band flow measurement service, an APN service, and a DetNet service. The in-band flow measurement service may include an IFIT service, or an IOAM service.

In a specific implementation, the first service includes a slice service, and the first service information includes a slice identifier.

In a specific implementation, the first service includes an in-band flow measurement service, and the first service information includes a flow identifier.

In a specific implementation, the first service includes an APN service, and the first service information includes at least one of a user group identifier and an application group identifier.

In a specific implementation, the first service includes a DetNet service, and the first service information includes a path identifier.

In a specific implementation, the network device supports the first service, and the processing module 2710 is further configured to process the packet based on the first service information.

In a specific implementation, the network device further supports the second service, and the processing module 2710 is further configured to process the packet based on the second service information.

In a specific implementation, the network device does not support the second service, and the processing module 2710 is further configured to skip the second service information.

In a specific implementation, the processing module 2710 is specifically configured to process the packet based on the first service information and local configuration information associated with the first service.

In a specific implementation, the first service information and the second service information are arranged in order, and the processing module 2710 is specifically configured to process the packet based on the arrangement order of the first service information and the second service information.

In a specific implementation, the transceiver module 2720 is further configured to receive indication information sent by a controller, where the indication information indicates the network device to generate the packet including the option field. For function implementation of the transceiver module 2720, refer to related descriptions in S2202.

The processing module 2710 is specifically configured to generate, based on the indication information, the packet including the option field.

In conclusion, according to the service processing apparatus provided in this embodiment of this application, a same option field in a same packet can carry service information of at least two different services. Therefore, overheads caused by some fixed content and some optional subfields in the option field can be reduced, thereby helping reduce packet overheads, simplifying packet processing complexity of the network device, and improving forwarding performance of the network device.

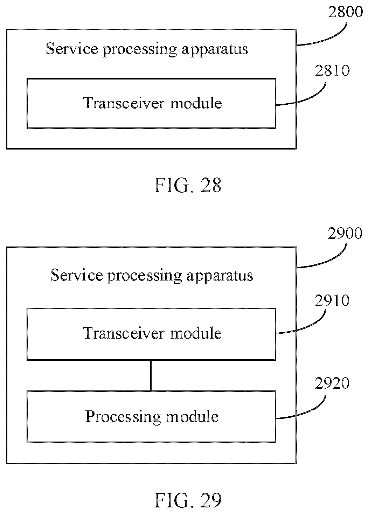

FIG. 28 is a schematic diagram of a structure of still another service processing apparatus 2800 according to an embodiment of this application. The service processing apparatus 2800 is applied to a controller. For example, the service processing apparatus 2800 is a controller or a function component in the controller. As shown in FIG. 28, the service processing apparatus 2800 includes a transceiver module 2810.

The transceiver module 2810 is configured to send indication information to a head node, where the indication information indicates the head node to generate a packet including an option field. The option field carries first service information and second service information, the first service information corresponds to a first service, the second service information corresponds to a second service, and the first service is different from the second service. For function implementation of the transceiver module 2810, refer to related descriptions in S2201.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

In conclusion, according to the service processing apparatus provided in this embodiment of this application, a same option field in a same packet can carry service information of at least two different services. Therefore, overheads caused by some fixed content and some optional subfields in the option field can be reduced, thereby helping reduce packet overheads.

FIG. 29 is a schematic diagram of a structure of yet another service processing apparatus 2900 according to an embodiment of this application. The service processing apparatus 2900 is applied to a head node. For example, the service processing apparatus 2900 is a head node or a function component in the head node. As shown in FIG. 29, the service processing apparatus 2900 includes a transceiver module 2910 and a processing module 2920.

The transceiver module 2910 is configured to receive indication information sent by a controller, where the indication information indicates the head node to generate a packet including an option field, where the option field carries first service information and second service information, the first service information corresponds to a first service, the second service information corresponds to a second service, and the first service is different from the second service. For function implementation of the transceiver module 2910, refer to related descriptions in S2202.

The processing module 2920 is configured to generate, based on the indication information, the packet including the option field.

Optionally, the option field includes a first subfield and a second subfield, the first subfield carries the first service information, and the second subfield carries the second service information.

Optionally, a length of the first subfield is the same as a length of the second subfield.

Optionally, the option field further includes a third subfield, the third subfield carries third service information, the third service information corresponds to a third service, and the first service, the second service, and the third service are different from each other; and the first subfield, the second subfield, and the third subfield are sequentially arranged, and a length of the third subfield is different from the length of the first subfield.

Optionally, the length of the third subfield is greater than the length of the first subfield.

Optionally, the length of the third subfield is less than the length of the first subfield.

Optionally, the length of the third subfield is equal to the length of the first subfield.

Optionally, both the length of the first subfield and the length of the second subfield are 2n bits, where n is an integer greater than or equal to 3.

Optionally, the option field further includes a fourth subfield, and the fourth subfield indicates the length of the first subfield and the length of the second subfield.

Optionally, the option field includes a service flag subfield, the service flag subfield corresponds to m services, the m services are different from each other, the m services include the first service and the second service, the service flag subfield indicates that the option field carries the first service information and the second service information, and m is an integer greater than or equal to 2.

Optionally, the service flag subfield includes m flag bits, and the m flag bits are in a one-to-one correspondence with the m services; and a first flag bit in the m flag bits corresponds to the first service, a second flag bit corresponds to the second service, the first flag bit indicates that the option field carries the first service information, and the second flag bit indicates that the option field carries the second service information.

Optionally, the first flag bit and the second flag bit are arranged in order, the first service information and the second service information are arranged in order, and an arrangement order of the first service information and the second service information corresponds to an arrangement order of the first flag bit and the second flag bit.

Optionally, the first service information is basic service information, the option field includes a service flag subfield, the service flag subfield corresponds to m services, the m services are different from each other, the m services include the second service, the service flag subfield indicates that the option field carries the second service information, and m is a positive integer.

Optionally, the first service is different from all of the m services.

Optionally, the service flag subfield indicates that the option field carries service information of k services in the m services, and the service information of the k services is all located after the basic service information.

Optionally, a subfield that is in the option field and that carries the basic service information is a basic subfield, the option field includes k service subfields that are in a one-to-one correspondence with the k services, and the k service subfields are located after the basic subfield.

Optionally, a length of the basic subfield is a fixed value.

Optionally, m≥4.

Optionally, the option field further includes a reserved subfield, and the reserved subfield is adjacent to the service flag subfield.

Optionally, a least significant bit of the reserved subfield is adjacent to a most significant bit of the service flag subfield.

Optionally, the option field includes a type subfield and a length subfield. The type subfield indicates a type of the option field, and the length subfield indicates a length of the option field.

Optionally, the indication information indicates the head node to generate an IPv6 packet including an IPv6 extension header, where the IPv6 extension header includes the option field. The processing module 2920 is configured to generate, based on the indication information, the IPv6 packet including the IPv6 extension header.

Optionally, the IPv6 extension header includes either of an HBH and a DOH.

Optionally, the first service includes any one of a slice service, an in-band flow measurement service, an APN service, and a DetNet service; or the second service includes any one of a slice service, an in-band flow measurement service, an APN service, and a DetNet service.

Optionally, the first service includes a slice service, and the first service information includes a slice identifier.

Optionally, the first service includes an in-band flow measurement service, and the first service information includes a flow identifier.

Optionally, the first service includes an APN service, and the first service information includes at least one of a user group identifier and an application group identifier.

Optionally, the first service includes a DetNet service, and the first service information includes a path identifier.

In conclusion, according to the service processing apparatus provided in this embodiment of this application, a same option field in a same packet can carry service information of at least two different services. Therefore, overheads caused by some fixed content and some optional subfields in the option field can be reduced, thereby helping reduce packet overheads.

It should be understood that the service processing apparatus provided in embodiments of this application may also be implemented by an application-specific integrated circuit (application-specific integrated circuit, ASIC) or a programmable logic device (programmable logic device, PLD). The PLD may be a complex programmable logical device (complex programmable logical device, CPLD), a field programmable gate array (field-programmable gate array, FPGA), generic array logic (generic array logic, GAL), or any combination thereof. The service processing methods provided in the foregoing method embodiments may also be implemented by using software. When the service processing methods provided in the foregoing method embodiments are implemented by using software, each module in the service processing apparatus may also be a software module.

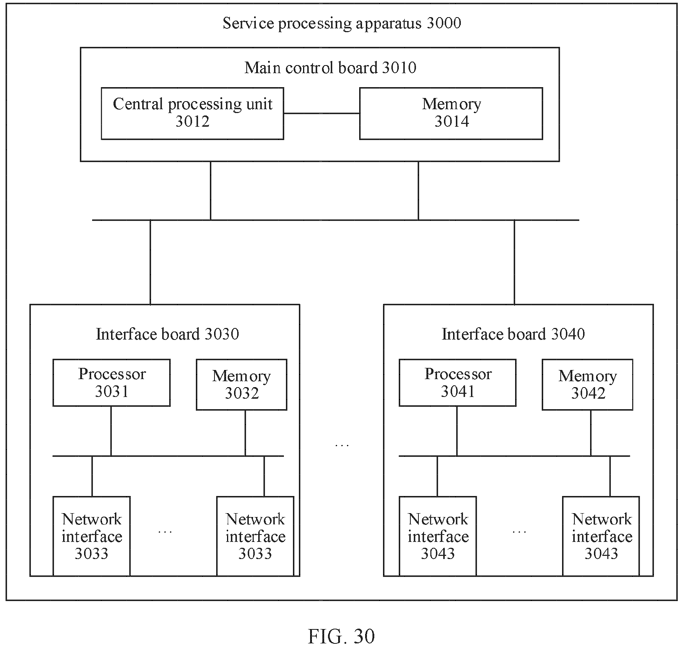

FIG. 30 is a schematic diagram of a structure of yet another service processing apparatus 3000 according to an embodiment of this application. The service processing apparatus 3000 may be a network device or a function component in the network device. The network device may be the network device A, the network device B, or the head node in the foregoing method embodiments.

As shown in FIG. 30, the service processing apparatus 3000 includes a main control board 3010, an interface board 3030, and an interface board 3040. When there are a plurality of interface boards, a switching board (not shown in FIG. 30) may be included. The switching board is configured to implement data exchange between interface boards (the interface board is also referred to as a line card or a service board).

The main control board 3010 is configured to complete functions such as system management, device maintenance, and protocol processing. The interface board 3030 and the interface board 3040 are configured to provide various service interfaces (for example, a POS interface, a GE interface, and an ATM interface), and forward packets. The main control board 3010 mainly includes three function units: a system management control unit, a system clock unit, and a system maintenance unit. The main control board 3010, the interface board 3030, and the interface board 3040 are connected to a system backplane by using a system bus to implement interworking. The interface board 3030 includes one or more processors 3031. The processor 3031 is configured to control and manage the interface board 3030, and communicate with a central processing unit 3012 on the main control board 3010. A memory 3032 on the interface board 3030 is configured to store a forwarding table, service-related local configuration information, and the like. If the service processing apparatus 3000 is the foregoing network device A, the memory 3032 is further configured to store an option field or configuration information of the option field, the processor 3031 is configured to generate a packet including the option field, and the processor 3031 is configured to process the packet based on the option field. If the service processing apparatus 3000 is the foregoing network device B, the processor 3031 processes the packet based on the option field in the packet. As shown in FIG. 30, the main control board 3010 may include a memory 3014. The memory 3014 on the main control board 3010 may also be configured to store service-related local configuration information, an option field, configuration information of the option field, or the like. This is not limited in this embodiment of this application. The interface board 3030 includes one or more network interfaces 3033 configured to receive and send a packet, and the processor 3031 processes the packet based on an option field in the packet received by the network interface 3033. A specific implementation process is not described herein again. Specific functions of the processor 3031 are not described herein again.

As shown in FIG. 30, this embodiment includes a plurality of interface boards, and uses a distributed forwarding mechanism. In this mechanism, operations on the interface board 3040 are basically similar to operations on the interface board 3030. For example, the interface board 3040 includes one or more network interfaces 3043 to receive and send a packet, includes a memory 3042 to store a forwarding table, service-related local configuration information, and the like, and includes a processor 3041 to control and manage the interface board 3040 and communicate with the central processing unit 3012 on the main control board 3010. For brevity, the interface board 3040 is not further described herein.

It may be understood that the processor 3031 on the interface board 3030 and/or the processor 3041 on the interface board 3040 in FIG. 30 may be dedicated hardware or a chip, for example, a network processor or an application-specific integrated circuit, to implement the foregoing functions. This implementation is generally referred to as a manner of using dedicated hardware or a chip for processing on a forwarding plane. In another implementation, the processor 3031 on the interface board 3030 and/or the processor 3041 on the interface board 3040 may alternatively use a general-purpose processor, for example, a general-purpose central processing unit (central processing unit, CPU), to implement the foregoing functions.

In addition, it should be noted that there may be one or more main control boards. When there are a plurality of main control boards, the main control boards may include a primary main control board and a secondary main control board. There may be one or more interface boards. A network device having a stronger data processing capability provides more interface boards. If there are a plurality of interface boards, the plurality of interface boards can communicate with each other by using one or more switching boards, and the plurality of interface boards can jointly implement load balancing and redundancy backup. In a centralized forwarding architecture, the network device may not need the switching board, and the interface board provides a function of processing service data of an entire system. In a distributed forwarding architecture, the network device includes a plurality of interface boards. Data exchange between the plurality of interface boards may be implemented by using a switching board, and the plurality of interface boards can provide a large-capacity data exchange and processing capability. Therefore, a data access and processing capability of a network device in the distributed architecture is better than that of a device in the centralized architecture. A specific architecture to be used depends on a networking deployment scenario. This is not limited herein.

In a specific implementation, the memory 3032 and/or the memory 3042 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only Memory, CD-ROM), or another optical storage, optical disk storage (including a compact disc, a laser disc, an optical disc, a digital versatile disc, a Blu-ray disc, and the like), magnetic disk or another magnetic storage device, or any other medium that can be for carrying or store expected program code in a form of instructions or a data structure and that can be accessed by a computer, but is not limited thereto. The memory 3032 may exist independently and be connected to the processor 3031 by using a communication bus, or may be integrated with the processor 3031. The memory 3042 may exist independently and be connected to the processor 3041 by using a communication bus, or may be integrated with the processor 3041.

The memory 3032 is configured to store program code, and the processor 3031 controls execution of the program code, to perform some or all of the steps of the service processing methods provided in the foregoing embodiments. The processor 3031 is configured to execute the program code stored in the memory 3032. The program code may include one or more software modules. The one or more software modules may be the function modules provided in the embodiments shown in FIG. 26, FIG. 27, or FIG. 29. The memory 3042 may also be configured to store program code, and the processor 3041 controls execution of the program code, to perform some or all of the steps of the service processing methods provided in the foregoing embodiments. Similarly, the memory 3014 may also be configured to store program code, and the central processing unit 3012 controls execution of the program code, to perform some or all of the steps of the service processing methods provided in the foregoing embodiments.

In a specific implementation, the network interface 3033 and the network interface 3043 may be apparatuses that use any transceiver or the like, and are configured to communicate with another device or a communication network, such as an Ethernet network, a radio access network (radio access network, RAN), or a wireless local area network (wireless local area network, WLAN).

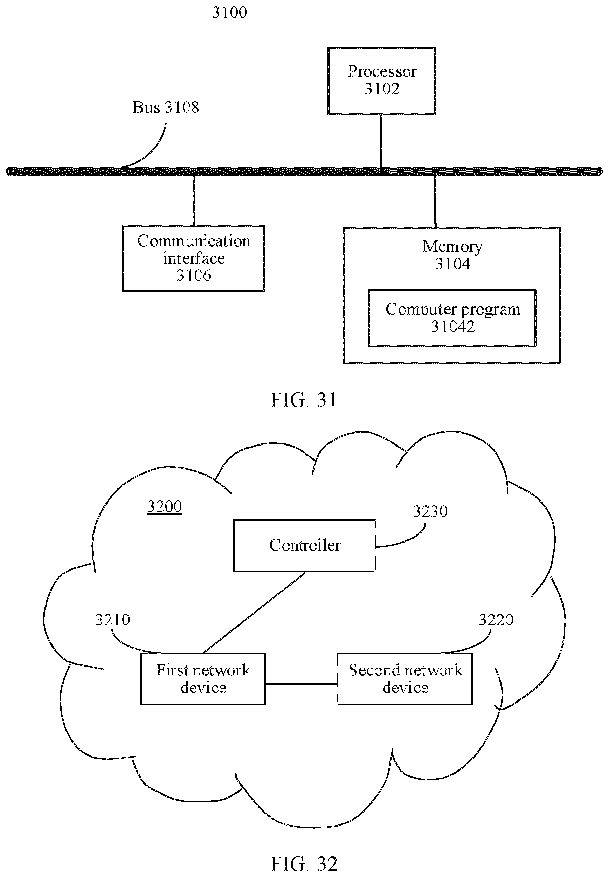

FIG. 31 is a schematic diagram of a structure of yet another service processing apparatus 3100 according to an embodiment of this application. The service processing apparatus 3100 may be a controller. Refer to FIG. 31. The service processing apparatus 3100 includes a processor 3102, a memory 3104, a communication interface 3106, and a bus 3108. The processor 3102, the memory 3104, and the communication interface 3106 are communicatively connected to each other by using the bus 3108. A connection manner between the processor 3102, the memory 3104, and the communication interface 3106 shown in FIG. 31 is merely an example. The processor 3102, the memory 3104, and the communication interface 3106 may be communicatively connected to each other in another connection manner other than the bus 3108.

The memory 3104 may be configured to store a computer program 31042, and the computer program 31042 may include program code. The memory 3104 may be various types of storage media, such as a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 3102 may be a general-purpose processor or a dedicated processor. The general-purpose processor may be a processor that performs a specific step and/or operation by reading and executing a computer program (for example, the computer program 31042) stored in a memory (for example, the memory 3104). The general-purpose processor may use the computer program stored in the memory (for example, the memory 3104) in a process of performing the foregoing step and/or operation. The general-purpose processor may be, for example, but not limited to, a CPU. The dedicated processor may be a processor specially designed to perform a specific step and/or operation. The dedicated processor may be, for example, but not limited to, a digital signal processor (digital signal processor, DSP), an ASIC, and an FPGA. In addition, the processor 3102 may alternatively be a combination of a plurality of processors, for example, a multi-core processor. The processor 3102 may include at least one circuit, to perform all or some of the steps in the service processing methods provided in the foregoing embodiments.

The communication interface 3106 may include an interface that is configured to implement component interconnection inside the service processing apparatus 3100, for example, an input/output (input/output, I/O) interface, a physical interface, or a logical interface, and an interface that is configured to implement interconnection between the service processing apparatus 3100 and another communication apparatus. The physical interface may be a gigabit Ethernet (gigabit Ethernet, GE) interface, and may be configured to implement interconnection between the service processing apparatus 3100 and another communication apparatus. The logical interface is an internal interface of the service processing apparatus 3100, and may be configured to implement component interconnection inside the service processing apparatus 3100. It is easy to understand that the communication interface 3106 may be configured to send and receive information between the service processing apparatus 3100 and another communication apparatus, and the communication interface 3106 may implement a related function of the transceiver module 2810. In addition, the communication interface 3106 may further include a transceiver to send and receive information. The transceiver may also implement a related function of the transceiver module 2810.

The bus 3108 may be any type of communication bus, for example, a system bus, configured to implement interconnection between the processor 3102, the memory 3104, and the communication interface 3106.

The foregoing components may be separately disposed on chips that are independent of each other, or at least some or all of the components may be disposed on a same chip. Whether the components are separately disposed on different chips or integrated and disposed on one or more chips usually depends on a requirement of a product design. A specific implementation form of the foregoing components is not limited in this embodiment of this application.

The service processing apparatus 3100 shown in FIG. 31 is merely an example. In an implementation process, the service processing apparatus 3100 may further include other components, which are not enumerated one by one in this specification. The service processing apparatus 3100 shown in FIG. 31 may perform service processing by performing all or some steps of the service processing methods provided in the foregoing embodiments.

FIG. 32 is a schematic diagram of a structure of a service processing system 3200 according to an embodiment of this application. The service processing system 3200 includes a first network device 3210 and a second network device 3220.

The first network device 3210 is configured to: generate a packet including an option field, and send the packet to the second network device 3220, where the option field carries first service information and second service information, the first service information corresponds to a first service, the second service information corresponds to a second service, and the first service is different from the second service.

The second network device 3220 is configured to: receive the packet, and process the packet based on the first service information.

In a specific implementation, the service processing system 3200 further includes a controller 3230, configured to send indication information to the first network device 3210, where the indication information indicates the first network device 3210 to generate the packet including the option field.

The first network device 3210 is specifically configured to generate, based on the indication information, the packet including the option field.

In a specific implementation, the first network device 3210 supports the first service, and the first network device 3210 is further configured to process the packet based on the first service information.

In a specific implementation, the first network device 3210 further supports the second service, and the first network device 3210 is further configured to process the packet based on second service information.

In a specific implementation, the first network device 3210 does not support the second service, and the first network device 3210 is further configured to skip the second service information.

In a specific implementation, the first network device 3210 is specifically configured to process the packet based on the first service information and local configuration information of the first network device.

In a specific implementation, the first service information and the second service information are arranged in order, and the first network device 3210 is specifically configured to process the packet based on an arrangement order of the first service information and the second service information.

In a specific implementation, the second network device 3220 supports the first service and the second service, and the second network device 3220 is further configured to process the packet based on the second service information.

In a specific implementation, the second network device 3220 supports the first service but does not support the second service, and the second network device 3220 is further configured to skip the second service information.

In a specific implementation, the second network device 3220 is specifically configured to process the packet based on the first service information and the local configuration information of the first network device.

In a specific implementation, the first service information and the second service information are arranged in order, and the second network device 3220 is specifically configured to process the packet based on the arrangement order of the first service information and the second service information.

In a specific implementation, the first network device 3210 is a head node on a forwarding path of the packet, and the second network device 3220 is an intermediate node or a tail node on the forwarding path. The service processing apparatus provided in FIG. 27 or FIG. 30 may be used as the head node; the service processing apparatus provided in FIG. 26 or FIG. 30 may be used as the intermediate node or the tail node; and the service processing apparatus provided in FIG. 28 or FIG. 31 may be used as the controller 3230.

In a specific implementation, the first network device 3210 is a head node or an intermediate node on a forwarding path of the packet, and the second network device 3220 is a tail node on the forwarding path. The service processing apparatus provided in FIG. 27 or FIG. 30 may be used as the head node or the intermediate node; the service processing apparatus provided in FIG. 26 or FIG. 30 may be used as the tail node; and the service processing apparatus provided in FIG. 28 or FIG. 31 may be used as the controller 3230.

In a specific implementation, the service processing apparatus provided in FIG. 29 may be used as the head node.

An embodiment of this application provides a data structure, and the data structure includes the option field provided in the foregoing embodiments of this application. For descriptions of the option field, refer to related descriptions in the foregoing embodiments of this application. Details are not described herein again.

For example, the option field may be an option field shown in any one of FIG. 14 to FIG. 17.

In a specific implementation, the option field may be the option field shown in FIG. 25.

An embodiment of this application provides a computer-readable storage medium. The computer-readable storage medium stores a computer program. When the computer program is executed (for example, executed by a service processing apparatus, a network device, a controller, or one or more processors), all or some of the steps of the service processing methods provided in the foregoing methods embodiments are implemented.

An embodiment of this application provides a computer program product. The computer program product includes a program or code. When the program or the code is executed (for example, executed by a service processing apparatus, a network device, a controller, or one or more processors), all or some of the steps of the service processing methods provided in the foregoing methods embodiments are implemented.

An embodiment of this application provides a chip. The chip includes a programmable logic circuit and/or program instructions. When the chip runs, the chip is configured to implement all or some of the steps of the service processing methods provided in the foregoing method embodiments.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that, in this application, "at least one" means one or more, and "a plurality of" means two or more. "At least two" means two or more. In this application, unless otherwise specified, the symbol "/" means "or". For example, A/B may represent A or B. The term "and/or" in this application is only an association relationship for describing associated objects and represents that three relationships may exist. For example, A and/or B may represent the following three cases: Only A exists, both A and B exist, and only B exists. In addition, for ease of clear description, in this application, terms such as "first", "second", "third", and "fourth" are used to distinguish between same items or similar items that have basically same functions and purposes. A person skilled in the art may understand that the terms such as "first", "second", "third", and "fourth" do not limit a quantity and an execution sequence.

For different types of embodiments such as the method embodiments and the apparatus embodiments provided in embodiments of this application, refer to each other. This is not limited in embodiments of this application. A sequence of the operations in the method embodiments provided in embodiments of this application can be properly adjusted, and operations can be correspondingly added or deleted based on a situation. Any variation readily figured out by a person skilled in the art within the technical scope disclosed in this application shall fall within the protection scope of this application. Therefore, details are not described again.

In corresponding embodiments provided in this application, the disclosed apparatus and the like may be implemented in other composition manners. For example, the described apparatus embodiments are merely examples. For example, division into the modules is merely logical function division, and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The modules described as separate parts may or may not be physically separate, and the parts described as modules may or may not be physical units, may be located in one position, or may be distributed on a plurality of devices (for example, network devices). Some or all the modules may be selected according to actual needs to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A service processing method, wherein the method comprises:
receiving (S303), by a network device, a packet comprising an option field, wherein the option field carries first service information and second service information, the first service information corresponds to a first service, the second service information corresponds to a second service, and the first service is different from the second service; and
processing (S304), by the network device, the packet based on the first service information.

2. A service processing method, wherein the method comprises:
generating (S301), by a network device, a packet comprising an option field, wherein the option field carries first service information and second service information, the first service information corresponds to a first service, the second service information corresponds to a second service, and the first service is different from the second service; and
sending (S302), by the network device, the packet.

3. The method according to claim 1 or 2, wherein
the option field comprises a first subfield and a second subfield, the first subfield carries the first service information, and the second subfield carries the second service information.

4. The method according to claim 3, wherein
a length of the first subfield is the same as a length of the second subfield.

5. The method according to claim 4, wherein
the option field further comprises a third subfield, the third subfield carries third service information, the third service information corresponds to a third service, and the first service, the second service, and the third service are different from each other; and
the first subfield, the second subfield, and the third subfield are sequentially arranged, and a length of the third subfield is different from the length of the first subfield.

6. The method according to claim 5, wherein
the length of the third subfield is greater than the length of the first subfield.

7. The method according to any one of claims 3 to 6, wherein
both the length of the first subfield and the length of the second subfield are 2n bits, wherein n is an integer greater than or equal to 3.

8. The method according to any one of claims 3 to 7, wherein
the option field further comprises a fourth subfield, and the fourth subfield indicates the length of the first subfield and the length of the second subfield.

9. The method according to any one of claims 1 to 8, wherein
the option field comprises a service flag subfield, the service flag subfield corresponds to m services, the m services are different from each other, the m services comprise the first service and the second service, the service flag subfield indicates that the option field carries the first service information and the second service information, and m is an integer greater than or equal to 2.

10. The method according to claim 9, wherein
the service flag subfield comprises m flag bits, and the m flag bits are in a one-to-one correspondence with the m services; and
a first flag bit in the m flag bits corresponds to the first service, a second flag bit in the m flag bits corresponds to the second service, the first flag bit indicates that the option field carries the first service information, and the second flag bit indicates that the option field carries the second service information.

11. The method according to claim 10, wherein
the first flag bit and the second flag bit are arranged in order, the first service information and the second service information are arranged in order, and an arrangement order of the first service information and the second service information corresponds to an arrangement order of the first flag bit and the second flag bit.

12. The method according to any one of claims 1 to 8, wherein
the first service information is basic service information, the option field comprises a service flag subfield, the service flag subfield corresponds to m services, the m services are different from each other, the m services comprise the second service, the service flag subfield indicates that the option field carries the second service information, and m is a positive integer.

13. The method according to any one of claims 9 to 12, wherein m≥4.

14. A service processing apparatus (2600, 2700), comprising a transceiver module (2610, 2720) and a processing module (2620, 2710), wherein
the transceiver module (2610, 2720) is configured to perform receiving and sending operations in the method according to any one of claims 1 to 13, and the processing module (2620, 2710) is configured to perform an operation other than the receiving and sending operations in the method according to any one of claims 1 to 13.

15. A service processing system (3200), comprising a first network device (3210) and a second network device (3220), wherein
the first network device (3210) is configured to: generate a packet comprising an option field, and send the packet to the second network device (3220), wherein the option field carries first service information and second service information, the first service information corresponds to a first service, the second service information corresponds to a second service, and the first service is different from the second service; and
the second network device (3220) is configured to: receive the packet, and process the packet based on the first service information.

## Patentansprüche

1. Dienstverarbeitungsverfahren, wobei das Verfahren Folgendes umfasst:
Empfangen (S303) eines Pakets durch eine Netzwerkeinrichtung, die ein Optionsfeld umfasst, wobei das Optionsfeld erste Dienstinformationen und zweite Dienstinformationen enthält, die ersten Dienstinformationen einem ersten Dienst entsprechend, die zweiten Dienstinformationen einem zweiten Dienst entsprechen und sich der erste Dienst von dem zweiten Dienst unterscheidet; und Verarbeiten (S304) des Pakets durch die Netzwerkeinrichtung basierend auf den ersten Dienstinformationen.

2. Dienstverarbeitungsverfahren, wobei das Verfahren Folgendes umfasst:
Generieren (S301) eines Pakets, das ein Optionsfeld umfasst, durch eine Netzwerkeinrichtung, wobei das Optionsfeld erste Dienstinformationen und zweite Dienstinformationen enthält, die ersten Dienstinformationen einem ersten Dienst entsprechen, die zweiten Dienstinformationen einem zweiten Dienst entsprechen und sich der erste Dienst von dem zweiten Dienst unterscheidet; und Senden (S302) des Pakets durch die Netzwerkeinrichtung.

3. Verfahren nach Anspruch 1 oder 2, wobei
das Optionsfeld ein erstes Unterfeld und ein zweites Unterfeld umfasst, das erste Unterfeld die ersten Dienstinformationen enthält und das zweite Unterfeld die zweiten Dienstinformationen enthält.

4. Verfahren nach Anspruch 3, wobei
eine Länge des ersten Unterfelds dieselbe wie eine Länge des zweiten Unterfelds ist.

5. Verfahren nach Anspruch 4, wobei
das Optionsfeld ferner ein drittes Unterfeld umfasst, das dritte Unterfeld dritte Dienstinformationen enthält, die dritten Dienstinformationen einem dritten Dienst entsprechen, und sich der erste Dienst, der zweite Dienst und der dritte Dienst voneinander unterscheiden; und
das erste Unterfeld, das zweite Unterfeld und das dritte Unterfeld nacheinander angeordnet sind, und sich eine Länge des dritten Unterfelds von der Länge des ersten Unterfelds unterscheidet.

6. Verfahren nach Anspruch 5, wobei
die Länge des dritten Unterfelds größer als die Länge des ersten Unterfelds ist.

7. Verfahren nach einem der Ansprüche 3 bis 6, wobei
sowohl die Länge des ersten Unterfelds als auch die Länge des zweiten Unterfelds 2n Bits sind, wobei n eine ganze Zahl größer oder gleich 3 ist.

8. Verfahren nach einem der Ansprüche 3 bis 7, wobei
das Optionsfeld ferner ein viertes Unterfeld umfasst, und das vierte Unterfeld die Länge des ersten Unterfelds und die Länge des zweiten Unterfelds angibt.

9. Verfahren nach einem der Ansprüche 1 bis 8, wobei
das Optionsfeld ein Dienstflag-Unterfeld umfasst, das Dienstflag-Unterfeld m Diensten entspricht, sich die m Dienste voneinander unterscheiden, die m Dienste den ersten Dienst und den zweiten Dienst umfassen, das Dienstflag-Unterfeld angibt, dass das Optionsfeld die ersten Dienstinformationen und die zweiten Dienstinformationen enthält, und m eine ganze Zahl größer oder gleich 2 ist.

10. Verfahren nach Anspruch 9, wobei
das Dienstflag-Unterfeld m Flag-Bits umfasst, und die m Flag-Bits in einer Eins-zu-Eins-Entsprechung zu den m Diensten stehen; und
das erste Flag-Bit in den m Flag-Bits dem ersten Dienst entspricht, das zweite Flag-Bit in den m Flag-Bits dem zweiten Dienst entspricht, das erste Flag-Bit angibt, dass das Optionsfeld die ersten Dienstinformationen enthält, und das zweite Flag-Bit angibt, dass das Optionsfeld die zweiten Dienstinformationen enthält.

11. Verfahren nach Anspruch 10, wobei
das erste Flag-Bit und das zweite Flag-Bit in einer Reihenfolge angeordnet sind, die ersten Dienstinformationen und die zweiten Dienstinformationen in einer Reihenfolge angeordnet sind, und eine Anordnungsreihenfolge der ersten Dienstinformationen und der zweiten Dienstinformationen einer Anordnungsreihenfolge des ersten Flag-Bits und des zweiten Flag-Bits entspricht.

12. Verfahren nach einem der Ansprüche 1 bis 8, wobei
die ersten Dienstinformationen grundlegende Dienstinformationen sind, das Optionsfeld ein Dienstflag-Unterfeld umfasst, das Dienstflag-Unterfeld m Diensten entspricht, sich die m Dienste voneinander unterscheiden, die m Dienste den zweiten Dienst umfassen, das Dienstflag-Unterfeld angibt, dass das Optionsfeld die zweiten Dienstinformationen enthält, und m eine positive ganze Zahl ist.

13. Verfahren nach einem der Ansprüche 9 bis 12, wobei m ≥ 4.

14. Dienstverarbeitungsvorrichtung (2600, 2700), umfassend ein Sende-/Empfangsmodul (2610, 2720) und ein Verarbeitungsmodul (2620, 2710), wobei
das Sende-/Empfangsmodul (2610, 2720) dazu konfiguriert ist, Empfangs- und Sendevorgänge in dem Verfahren nach einem der Ansprüche 1 bis 13 durchzuführen, und das Verarbeitungsmodul (2620, 2710) dazu konfiguriert ist, einen Vorgang durchzuführen, der sich von den Empfangs- und Sendevorgängen nach einem der Ansprüche 1 bis 13 unterscheidet.

15. Dienstverarbeitungssystem (3200), umfassend eine erste Netzwerkeinrichtung (3210) und eine zweite Netzwerkeinrichtung (3220), wobei
die erste Netzwerkeinrichtung (3210) dazu konfiguriert ist: ein Paket, das ein Optionsfeld umfasst, zu generieren, und das Paket an die zweite Netzwerkeinrichtung (3220) zu senden, wobei das Optionsfeld erste Dienstinformationen und zweite Dienstinformationen enthält, die ersten Dienstinformationen einem ersten Dienst entsprechen, die zweiten Dienstinformationen einem zweiten Dienst entsprechen und sich der erste Dienst von dem zweiten Dienst unterscheidet; und
die zweite Netzwerkeinrichtung (3220) dazu konfiguriert ist: das Paket zu empfangen, und das Paket basierend auf den ersten Dienstinformationen zu verarbeiten.

## Revendications

1. Procédé de traitement de service, dans lequel le procédé comprend :
la réception (S303), par un dispositif réseau, d'un paquet comprenant un champ d'option, dans lequel le champ d'option contient des informations de premier service et des informations de deuxième service, les informations de premier service correspondant à un premier service, les informations de deuxième service correspondant à un deuxième service, et le premier service est différent du deuxième service ; et
le traitement (S304), par le dispositif réseau, du paquet basé sur les informations de premier service.

2. Procédé de traitement de service, dans lequel le procédé comprend :
la génération (S301), par un dispositif réseau, d'un paquet comprenant un champ d'option, dans lequel le champ d'option contient des informations de premier service et des informations de deuxième service, les informations de premier service correspondant à un premier service, les informations de deuxième service correspondant à un deuxième service, et le premier service est différent du deuxième service ; et
l'envoi (S302), par le dispositif réseau, du paquet.

3. Procédé selon la revendication 1 ou 2, dans lequel
le champ d'option comprend un premier sous-champ et un deuxième sous-champ, le premier sous-champ contient les informations de premier service, et le deuxième sous-champ contient les informations de deuxième service.

4. Procédé selon la revendication 3, dans lequel
une longueur du premier sous-champ est identique à une longueur du deuxième sous-champ.

5. Procédé selon la revendication 4, dans lequel
le champ d'option comprend également un troisième sous-champ, le troisième sous-champ contient des informations de troisième service, les informations de troisième service correspondent à un troisième service, et le premier service, le deuxième service et le troisième service sont différents les uns des autres ;
le premier sous-champ, le deuxième sous-champ et le troisième sous-champ sont disposés séquentiellement, et la longueur du troisième sous-champ est différente de la longueur du premier sous-champ.

6. Procédé selon la revendication 5, dans lequel
la longueur du troisième sous-champ est supérieure à la longueur du premier sous-champ.

7. Procédé selon l'une quelconque des revendications 3 à 6, dans lequel
la longueur du premier sous-champ et la longueur du deuxième sous-champ sont toutes deux de 2n bits, où n est un entier supérieur ou égal à 3.

8. Procédé selon l'une quelconque des revendications 3 à 7, dans lequel
le champ d'option comprend également un quatrième sous-champ, et ce quatrième sous-champ indique la longueur du premier sous-champ et la longueur du deuxième sous-champ.

9. Procédé selon l'une quelconque des revendications 1 à 8, dans lequel
le champ d'option comprend un sous-champ d'indicateur de service, le sous-champ d'indicateur de service correspond à m services, les m services sont différents les uns des autres, les m services comprennent le premier service et le deuxième service, le sous-champ d'indicateur de service indique que le champ d'option contient les informations de premier service et les informations de deuxième service, et m est un entier supérieur ou égal à 2.

10. Procédé selon la revendication 9, dans lequel
le sous-champ d'indicateur de service comprend m bits d'indicateur, et les m bits d'indicateur correspondent un à un aux m services ; et
un premier bit d'indicateur parmi les m bits d'indicateur correspond au premier service, un deuxième bit d'indicateur parmi les m bits d'indicateur correspond au deuxième service, le premier bit d'indicateur indique que le champ d'option contient les informations de premier service, et le deuxième bit d'indicateur indique que le champ d'option contient les informations de deuxième service.

11. Procédé selon la revendication 10, dans lequel
le premier bit d'indicateur et le deuxième bit d'indicateur sont disposés dans l'ordre, les informations de premier service et les informations de deuxième service sont disposées dans l'ordre, et un ordre de disposition des informations de premier service et des informations de deuxième service correspond à un ordre de disposition du premier bit d'indicateur et du deuxième bit d'indicateur.

12. Procédé selon l'une quelconque des revendications 1 à 8, dans lequel
les informations de premier service sont des informations de service basiques, le champ d'option comprend un sous-champ d'indicateur de service, le sous-champ d'indicateur de service correspond à m services, les m services sont différents les uns des autres, les m services comprennent le deuxième service, le sous-champ d'indicateur de service indique que le champ d'option contient les informations de deuxième service, et m est un entier positif.

13. Procédé selon l'une quelconque des revendications 9 à 12, dans lequel m ≥ 4.

14. Appareil de traitement de service (2600, 2700), comprenant un module émetteur-récepteur (2610, 2720) et un module de traitement (2620, 2710), dans lequel
le module émetteur-récepteur (2610, 2720) est configuré pour effectuer des opérations de réception et d'envoi selon le procédé selon l'une quelconque des revendications 1 à 13, et le module de traitement (2620, 2710) est configuré pour effectuer une opération autre que les opérations de réception et d'envoi selon le procédé selon l'une quelconque des revendications 1 à 13.

15. Système de traitement de service (3200), comprenant un premier dispositif réseau (3210) et un second dispositif réseau (3220), dans lequel
le premier dispositif réseau (3210) est configuré pour : générer un paquet comprenant un champ d'option, et envoyer le paquet au second dispositif réseau (3220), dans lequel le champ d'option contient des informations de premier service et des informations de deuxième service, les informations de premier service correspondent à un premier service, les informations de deuxième service correspondent à un deuxième service, et le premier service est différent du deuxième service ; et
le second dispositif réseau (3220) est configuré pour : recevoir le paquet et traiter le paquet sur la base des informations de premier service.
